# EUROPEAN PATENT SPECIFICATION

(11) **EP 1 732 278 B1**
(45) Date of publication and mention of the grant of the patent: **17.09.2008**
(21) Application number: 06011766.0
(22) Date of filing: 07.06.2006
(51) Int. Cl.: H04L 12/66, H04L 12/28

(54) **Method for switching channels in a wireless communication network**
Verfahren zur Kanalumschaltung in einem drahtlosen Kommunikationsnetzwerk
Procédé pour la commutation de chaînes dans un réseau mobile de communication

(30) Priority: 08.06.2005 JP 2005168536
(43) Date of publication of application: 13.12.2006
(73) Proprietor: Sony Corporation, Tokyo (JP)
(72) Inventor: Hayasaka, Mitsuharu, Shinagawa-ku Tokyo (JP)
(74) Representative: Müller - Hoffmann & Partner

(56) References cited:
- EP-A- 1 480 355
- WO-A-20/05011177
- US-A1- 2004 203 787

## Description

### BACKGROUND OF THE INVENTION

### 1. Field of the Invention

The present invention relates to an apparatus used as an access point, for example, of a wireless (radio) LAN (Local Area Network) system, and a method and program for switching a wireless communication channel used for this apparatus.

### 2. Description of the Related Art

In recent years, also in domestic, the wireless LAN system arranged to be wirelessly connected between various electronic devices is built increasingly. In the case of the wireless LAN system, since it is not necessary to wire LAN cables, no LAN cables are exposed indoors, a fine sight is not damaged, and an installation place for the apparatuses can also be flexibly chosen.

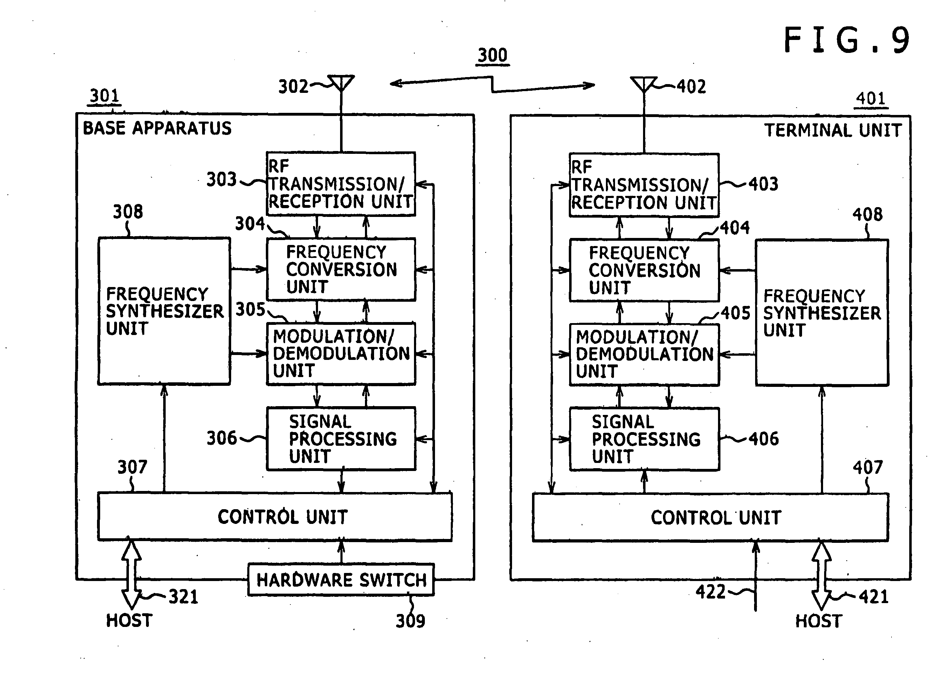

In the wireless LAN system, it is generally arranged that a plurality of wireless channels (wireless communication channels) can be used, and it is often the case that a wireless channel used for communications is selected and changed. Now, a change of the wireless channels in a conventional wireless LAN system 300 as shown in FIG. 9 will be described.

The wireless LAN system 300 as shown in FIG. 9 is substantially constituted by a base apparatus 301 for selecting and changing a wireless channel and a terminal unit 401. The base apparatus 301 and the terminal unit 401 are equivalent to, for example, a wireless LAN card mounted in a note type personal computer (hereafter only referred to as notebook PC) and a wireless LAN module unit built in various types of electronic devices, such as a personal computer connected to the wireless LAN system.

Therefore, the base apparatus 301 and the terminal unit 401 are connected to host apparatuses (as indicated by HOST in the figures) which are electronic devices, such as a notebook PC which supplies data to be transmitted to these base apparatus 301 and terminal unit 401, or receives and processes the data received through them, and that is an apparatus located at a higher rank than the base apparatus 301 and the terminal unit 401.

In a conventional common wireless LAN system as shown in FIG. 9, changes in wireless channels are roughly classified into two types, which are (1) a change to a wireless channel specified by a request from the host apparatus of the terminal unit 401, and (2) a change to a wireless channel specified by a hardware switch 309 in the base apparatus 301. Hereafter, each change will be described.

Firstly, as for a case of the change based on the request from the host apparatus of the terminal unit 401, for example, when a channel changing instruction is issued by a consumer (user) to the host apparatus of the terminal unit 401 during communications, a specified wireless channel changing request signal 422 is supplied from the host apparatus of the terminal unit 401 to a signal processing unit 406. The specified wireless channel changing request signal 422 is supplied to a modulation/demodulation unit 405 as transmission data, and up-converted to an IF transmission signal.

The IF transmission signal which is up-converted and formed in the modulation unit 405 is supplied to a frequency conversion unit 404, where it is up-converted to an RF transmission signal. Then, it is amplified in an RF transmission/reception unit 403, and transmitted from an antenna 402. The transmitted RF signal is received by an antenna 302 of the base apparatus 301, passes through a circuit portion of a receiving system of the base apparatus 301, and is supplied to a control unit 307 as the wireless channel changing request signal.

Now, the control unit 307 once interrupts communications with the terminal unit 401, and supplies a control signal for changing the wireless channel, to a frequency synthesizer unit 308. The frequency synthesizer unit 308 changes a frequency of an RF local signal to correspond to the request from the terminal unit 401, and changes the wireless channel of the base apparatus 301. Thus, the change of the wireless channel is carried out according to a demand from the host apparatus on the terminal unit 401 side. Such a method is also described in document WO-A2-2005/011177.

The other method for performing the specified wireless channel change is carried out through the hardware switch unit 309 provided for the base apparatus 301. By setting the hardware switch unit 309 to be a specified wireless channel, the specified wireless channel changing request signal is supplied from the hardware switch unit 309 to the control unit 307.

The control unit 307 supplies the control signal for changing the wireless channel, to the frequency synthesizer unit 308. The frequency synthesizer unit 308 changes the frequency of the RF local signal to correspond to the setup of the hardware switch unit 309, and changes the wireless channel of the base apparatus 301. Thus, the setup of the hardware switch unit 309 is changed by a user of the base apparatus 301, to thereby achieve the change to the wireless channel intended by the user.

However, as for the channel changing in the conventional and general wireless LAN system as described above, since there is no guiding principle of selecting a wireless channel, it is not possible to select an optimal wireless channel always, if the user does not know an environmental electric wave situation in use. Thus, there is a possibility that a proper communication state may not be maintained always.

In order to solve such a problem, Japanese Patent Application Publication No. 2004-96595 discloses a technique which allows a base apparatus to detect an optimal wireless channel for communication from amongst a plurality of available wireless channels, to notify a user of this detected wireless channel through a display apparatus, or to automatically change the detected wireless channel, when the base apparatus of the wireless LAN system is started, or when a changeover demand for switching the wireless channel is received from a terminal unit of the wireless LAN system.

By way of the technique disclosed in Japanese Patent Application Publication No. 2004-96595, it is possible to communicate between the base apparatus and the terminal unit through the optimal wireless channel, when the base apparatus is started, or when the changeover demand for switching the wireless channel is received from the terminal unit.

### SUMMARY OF THE INVENTION

However, in the case of the technique disclosed in Japanese Patent Application Publication No. 2004-96595, because of its structure, it is not possible to retrieve another clear wireless channel after the optimal wireless channel is set up and wireless LAN connection is established between the base apparatus and the terminal unit. This is because the base apparatus must change its own frequency at an antenna in order to investigate the electric wave situation of wireless channels other than the currently set up wireless channel.

The electric wave situation (electric wave environment) changes every moment. Even if it is the clear wireless channel at a certain time, it is not always so. Therefore, in order to always select the optimal wireless channel, it is essential to search for the clear wireless channel periodically. However, in the case of the technique disclosed in Japanese Patent Application Publication No. 2004-96595, after connecting to the wireless channel, unless the connected channel is released by interrupting the communications, it is not possible to perform a process of detecting the optimal wireless channel.

Further, in the conventional wireless LAN system as shown in FIG. 9 or the wireless LAN system as disclosed in Japanese Patent Application Publication No. 2004-96595, when changing the wireless channel used for communications, the wireless LAN connection between the base apparatus and the terminal unit is disconnected while the process of changing the wireless channel is being performed. Thus, the data transmission and reception between both is temporarily stopped.

In particular, the conventional wireless channel change processing is generally accompanied by restarting of the whole wireless system 301 in the base apparatus. Generally, it takes for this restarting process the time in the order of a few seconds. For this reason, when data, such as for example video data, which require real time capability are being transmitted and received, there is a problem in that the video stops for several seconds, for example, thus damaging viewer's convenience.

In view of the above, the present invention aims to retrieve an optimal wireless channel, at a proper timing, in a wireless LAN system, to switch a wireless channel quickly so that communications may not be affected.

According to an embodiment of the present invention, in order to solve the above-mentioned problem, there is provided a base apparatus for a wireless LAN system, having: two or more wireless units including communication means for communicating with a terminal unit through a wireless communication channel, channel selection means for selecting the wireless communication channel used by the communication means, detection means for detecting a reception level of a noise signal received through the communication means, determination means for determining whether or not a signal received through the communication means is a wireless LAN signal of another system; unit setting means for setting one of the two or more wireless units as a wireless unit for communication with the terminal unit, and setting another as a wireless unit for retrieving an optimal wireless communication channel at the time of starting; channel setting means for selecting and setting up a wireless communication channel used for communications regarding the wireless unit for communications; state detection means for detecting a communication state of the wireless communication channel being used for communications, based on detection output from the detection means of the wireless unit for communications and determination output from the determination means, at every predetermined timing after connecting a communication line with the terminal unit by means of the wireless unit for communications; retrieval means for retrieving the optimal wireless communication channel, based on the detection output from the detection means and the determination output from the determination means, while changing an available wireless communication channel except for the wireless communication channel being used for communications, at every the predetermined timing, in the wireless unit for retrieving by controlling the channel selection means, after connecting the communication line with the terminal unit by means of the wireless unit for communications; candidate channel setup means for setting the optimal wireless communication channel retrieved by the retrieval means as a candidate for a wireless communication channel used for communications, regarding the wireless unit for retrieving; and switch control means for replacing the wireless unit for communications by the wireless unit for retrieving that is switched to the wireless unit for communication with the terminal unit, when the wireless communication channel as the candidate retrieved by the retrieval means has the communication state better than that of the wireless communication channel which is already used for communications, and newly switching a wireless unit except for the wireless unit for communications to a wireless unit for retrieving the optimal wireless communication channel.

According to the embodiment of the present invention, the base apparatus is provided with two or more sets of wireless units having the communication means and the channel selection means. When starting, the setup means causes one wireless unit to be used for communication with the terminal unit, and the other wireless unit is used for retrieving the optimal wireless communication channel. The optimal wireless communication channel is retrieved by the retrieval means at every predetermined timing, based on information on the level of the received signal with respect to a plurality of available wireless communication channels and information on the resulting determination as to whether there is the wireless LAN signal (wireless LAN signal), from the detection means and the determination means of the wireless unit caused to be used for retrieval.

The optimal wireless communication channel detected by the retrieval means can communicate properly, since it has neither noise whose signal level is greater than a predetermined value nor wireless LAN signal of another wireless LAN system. When a wireless communication channel is detected which is better than the wireless communication channel currently used by the retrieval means, it is controlled by the switch control means so that the wireless communication channel may be switched together with the whole wireless unit.

Thus, even if actual communications are carried out by connecting the wireless communication channel, it is possible to quickly switch to a wireless communication channel in a good channel condition, and to continue the communications without troubling a user at all, without causing disadvantages, such as a long period of disconnection of the current communications.

In other words, even if the user does nothing, according to changes in a communication situation, it is possible to periodically detect a clear wireless communication channel which can communicate best, and to switch it without causing a disadvantage of interrupting communication for a relatively long period of time, such as several seconds to tens of seconds etc. for switching the wireless communication channels.

According to the present invention, even during communications, the optimal wireless communication channel can be retrieved periodically Further, when the optimal wireless communication channel is detected, a wireless communication channel can be changed (switched) quickly, without interrupting communications.
Further features of the invention, and the advantages offered thereby, are explained in detail hereinafter, in reference to specific embodiments of the invention illustrated in the accompanying drawings.

### BRIEF DESCRIPTION OF THE DRAWINGS

FIG. 1 is a block diagram for explaining an example of a wireless LAN system constituted by base apparatuses to which a preferred embodiment in accordance with the present invention is applied;
FIG. 2 is a block diagram for explaining a structure of RF units 104 and 105 of a base apparatus 101;
FIG. 3 is a flow chart for explaining the whole process performed in the base apparatus 101;
FIG. 4 is a flow chart following that in FIG. 3;
FIG. 5 is a flow chart for explaining a received signal detection / determination process;
FIG. 6 is a flow chart for explaining optimal wireless channel selection processing;
FIG. 7 is a flow chart for explaining optimal wireless channel candidate detection processing;
FIG. 8 is a flow chart for explaining RF unit switching decision and a switching process; and
FIG. 9 is a block diagram for explaining an example of a conventional wireless LAN system.

### DESCRIPTION OF THE PREFERRED EMBODIMENTS

Hereafter, preferred embodiments of an apparatus, a method, and a program in accordance with the present invention will be described with reference to the drawings.

### [Outline of Wireless LAN System]

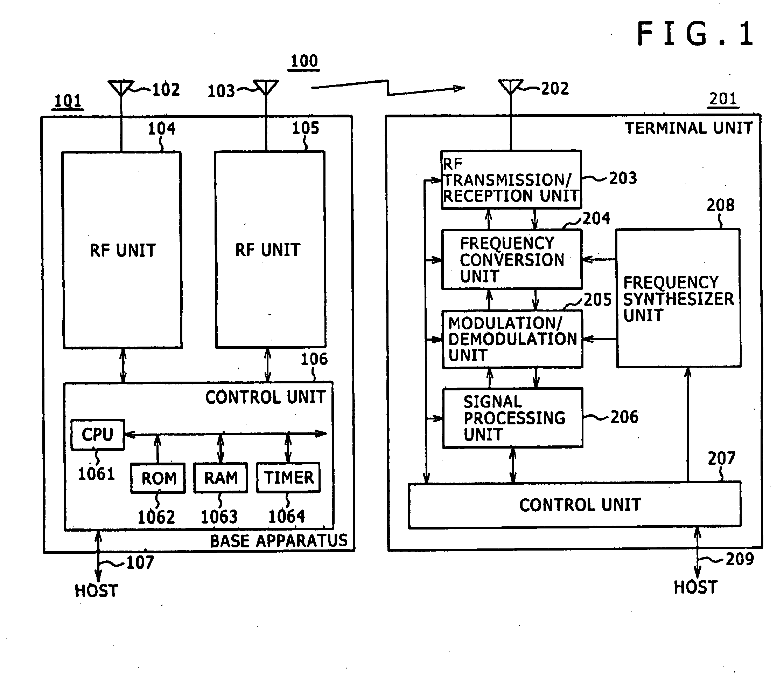

FIG. 1 is a block diagram for explaining an example of a wireless LAN system arranged by using a base apparatuses to which a preferred embodiment of the present invention is applied. As shown in FIG. 1, a wireless LAN system 100 of this preferred embodiment is constituted by a base apparatus 101 which is an access point, and a station terminal unit (hereafter only referred to as terminal unit) 201. Both the base apparatus 101 and the terminal unit 201 are equivalent to a wireless LAN card mounted in a notebook PC and a wireless LAN module unit built in various types of electronic devices, such as a personal computer connected to a wireless LAN system.

Therefore, the base apparatus 101 and the terminal unit 201 are connected respectively through interfaces 107 and 209 to host apparatuses (as indicated by host in FIG. 1), such as for example a personal computer that is an electric apparatus which supplies transmission data to these base apparatus 101 and terminal unit 201, and is supplied with and processes reception data received through these. The host apparatuses are located at a higher rank than the base apparatus 101 and a terminal unit 201.

In addition, it is possible to connect the base apparatus 100 with the terminal unit 201 by way of various wireless communication protocols. However, this preferred embodiment will be described, assuming that the base apparatus 101 and the terminal unit 201 perform wireless communications in compliance with IEEE (Institute of Electrical and Electronics Engineers) 802.11 in wireless LAN, that is the protocol of the International Standard.

As shown in FIG. 1, the base apparatus of this preferred embodiment is provided with an RF unit 104 to which an antenna 102 is connected, an RF unit 105 to which an antenna 103 is connected, and a control unit 106 for controlling these two RF units 104 and 105. In other words, the base apparatus 101 of this preferred embodiment is provided with two communication systems, which are a first communication system constituted by the antenna 102 and the RF unit 104, and a second communication system constituted by the antenna 103 and the RF unit 105.

Here, the control unit 106 is a microcomputer constituted by a CPU (Central Processing Unit) 1061, a ROM (Read Only Memory) 1062, and a RAM (Random Access Memory) 1063 which are connected together by a CPU bus, and controls each part of this base apparatus 101. Further, this control unit 106 is provided with a timer (clock circuit) 1064, and has a function of measuring proper time.

On the other hand, the terminal unit 201 is conventional and used for the wireless LAN system, and is provided with an antenna 202, an RF transmission/reception unit 203, a frequency conversion unit 204, a modulation/demodulation unit 205, a signal processing unit 206, a control unit 207, and a frequency synthesizer unit 208. Although not shown, as with the control unit 106 of the base apparatus 101, the control unit 207 is a microcomputer provided with a CPU, a ROM, a RAM, etc., and controls each part of this terminal unit 201.

These base apparatus 101 and terminal unit 201 can communicate with each other by connecting a communication line between them via a predetermined wireless communication channel. Further, in the wireless LAN system 100 of this preferred embodiment, while always using an optimal wireless channel, the base apparatus 101 transmits, for example, video data and audio data without interruption so that the terminal unit 201 may receive these data without interruption.

### [Structure of Base Apparatus 101 and Fundamental Operation]

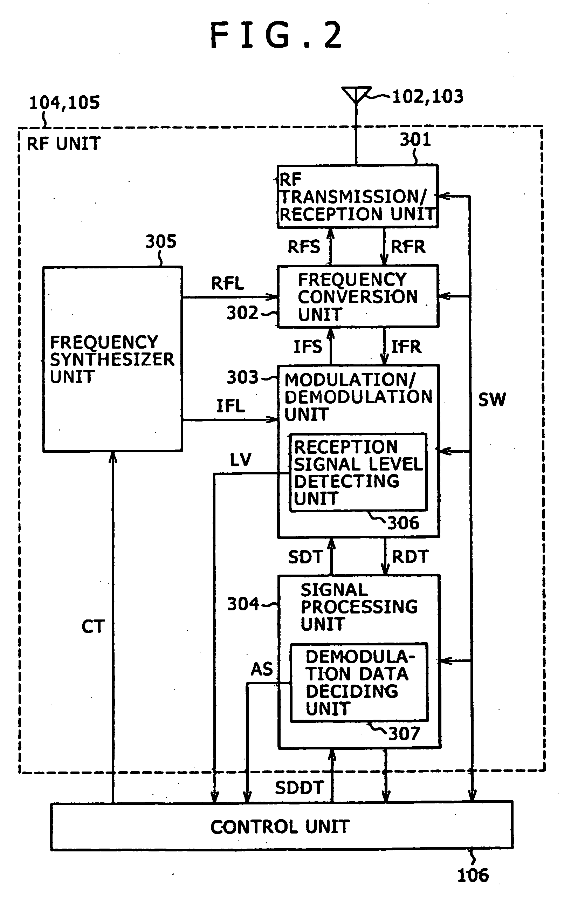

Next, the more detailed structure of the base apparatus 101 and fundamental operation will be described. As shown in FIG. 1, the base apparatus 101 of this preferred embodiment is provided with two RF units, which are the RF unit 104 and the RF unit 105. FIG. 2 is a block diagram for explaining the structure of these RF units 104 and 105. In other words, each of the RF units 104 and 105 provided for the base apparatus 101 of this preferred embodiment has the structure as shown in FIG. 2.

As shown in FIG. 2, each of the RF units 104 and 105 is provided with an RF transmission/reception unit 301, a frequency conversion unit 302, a modulation/demodulation unit 303, a signal processing unit 304, and a frequency synthesizer unit 305. Further, the modulation/demodulation unit 303 is provided with a reception signal level detecting unit 306, and the signal processing unit 304 is provided with a demodulation data deciding unit 307.

Each of the RF units 104 and 105 can realize a communication function which connects a communication line with the terminal units 201 via a predetermined wireless channel, and transmits and receives data under the control from the control unit 106, a state detection function to detect a state of the wireless channel, and a retrieval function which retrieves an optimal wireless channel with few noises etc. from among a plurality of available wireless channels.

Hereafter, a particular operation in the case where each of the communication function, the state detection function, and the retrieval function is used for each of the RF units 104 and 105 will be described. In addition, for ease of explanation, taking the RF unit 104 as an example, a particular operation in the case where each of the communication function, the state detection function, and the retrieval function is used will be described.

### [Operation When Communication Function Is Used]

When the communication function is used in the RF unit 104, each of the RF transmission/reception unit 301, the frequency conversion unit 302, the modulation/demodulation unit 303, and the signal processing unit 304 is alternately switched between a state of reception process and a state of transmission process by means of a transmission/reception switching control signal SW from the control unit 106, so that either of the processes may be appropriately performed to allow communications.

Then, data SDDT transmitted from the base apparatus 101 side are supplied to the signal processing unit 304 via the control unit 106. The signal processing unit 304 packetizes the data SDDT from the control unit 106, for example, to form transmission data SDT, which are baseband signals and supplied to the modulation/demodulation unit 303.

By means of an IF local signal IFL from the frequency synthesizer unit 305 which operates according to control of the control unit 106, the modulation/demodulation unit 303 up-converts the transmission data SDT into an intermediate frequency signal, and forms an IF transmission signal IFS, which is supplied to the frequency conversion unit 302. By means of an RF local signal RFL from the frequency synthesizer unit 305 which operates under the control of the control unit 106, the frequency conversion unit 302 up-converts the IF transmission signal IFS into a high frequency signal, and forms an RF transmission signal RFS, which is supplied to the RF transmission/reception unit 301.

The RF transmission/reception unit 301 performs a process of amplifying the RF transmission signal RFS from the frequency conversion unit 302 etc., forms a transmission signal to be actually transmitted, which is transmitted through the corresponding antenna 102. Thus, the base apparatus 101 is arranged to transmit the data to the terminal unit which is a communication partner, via the predetermined wireless channel.

On the other hand, the signal received through the corresponding antenna 102 is supplied to the RF transmission/reception unit 301 of the RF unit 104. The RF transmission/reception unit 301 performs a filtering process and an amplification process for band restrictions with respect to the signal from the antenna 103, and acquires an RF reception signal RFR, which is a high frequency signal and supplied to the frequency conversion unit 302.

The frequency conversion unit 302 down-converts the RF reception signal RFR by means of the RF local signal RFL from the frequency synthesizer unit 305, and forms an IF reception signal IFR of an intermediate frequency signal, which is supplied to the modulation/demodulation unit 303. The modulation/demodulation unit 303 down-converts the IF reception signal from the frequency conversion unit 302 by means of the IF local signal IFL from the frequency synthesizer unit 305, and forms a baseband signal RDT, which is supplies to the signal processing unit 304.

The signal processing unit 304 decodes the packetized baseband signal RDT, and supplies the resulting reception data to the control unit 106. Thus, the control unit 106 of the base apparatus 101 is arranged to be supplied with the data transmitted from the terminal unit 201, and able to perform a process etc. according thereto. In this way, the data can be transmitted and received through the RF unit 104 which is arranged to use the communication function, in this example.

### [Operation When State Detection Function Is Used]

Further, in the case where the state detection function is used in the RF unit 104, when each of the RF transmission/reception unit 301, the frequency conversion unit 302, the modulation/demodulation unit 303, and the signal processing unit 304 is in a state where it is switched to perform the reception process by means of the transmission/reception switching control signal SW from the control unit 106, a state of the wireless channel being used for communication is checked. In other words, as with the case of the processing at the time of the reception as described above, the signal of the wireless channel used for communication is received through the antenna and supplied to the RF transmission/reception unit 301.

As described above, the RF transmission/reception unit 301 performs the filtering process and the amplification process for band restrictions with respect to the signal from the antenna 102, and acquires the RF reception signal RFR, which is the high frequency signal and supplied to the frequency conversion unit 302. The frequency conversion unit 302 down-converts the RF reception signal RFR by means of the RF local signal RFL from the frequency synthesizer unit 305, and forms the IF reception signal IFR of the intermediate frequency signal, which is supplied to the modulation/demodulation unit 303.

The modulation/demodulation unit 303 causes the reception signal level detecting unit 306 to detect a reception level LV of the IF reception signal which is from the frequency conversion unit 302, and supplies this reception level LV to the control unit 106. Further, the modulation/demodulation unit 303 down-converts the IF reception signal IFR from the frequency conversion unit 302 by means of the IF local signal IFL from the frequency synthesizer unit 305, and forms the baseband signal RDT, which is supplied to the signal processing unit 304. The signal processing unit 304 decodes the packetized baseband signal RDT, causes the demodulation data deciding unit 307 to decide whether or not the demodulated reception data are the data of a predetermined format which are transmitted and received through the wireless LAN, and notifies the control unit 106 of the resulting decision AS.

In this way, the RF unit 104 is arranged to detect the states of the wireless channel used for communications, such as whether there is any noise with a high signal level in the wireless channel used for communications, whether there is a signal of another wireless LAN system, etc.

### [Operation When Retrieval Function Is Used]

Further, in the case where the retrieval function of the wireless channel used for communications in the RF unit 104 is employed, with respect to each of the plurality of wireless channels which are beforehand specified as the wireless channels available for communications, as with the case of the state detection function, the state of each wireless channel is detected, and the wireless channel which is most suitable for communication is selected based on the resulting detection with respect to each wireless channel.

In particular, the control unit 106 controls the frequency synthesizer unit 305 by means of a control signal CT, and changes the RF local signal RFL and the IF local signal IFL. For each of the plurality of wireless channels decided as the available wireless channel, the control unit 106 detects the reception signal level by means of the reception signal level detecting unit 306 of the modulation/demodulation unit 303, and makes a decision on a format of the received signal by means of the demodulation data deciding unit 307 of the signal processing unit 304, as described above.

Thus, for each of the plurality of wireless channels decided as the available wireless channels, the control unit 106 obtains the reception signal level LV and the resulting decision (demodulation decision signal) AS in a reception signal format, to thereby retrieve a wireless channel suitable for communication which does not have a noise with a high signal level and does not have a signal of another wireless LAN system, either.

Taking the case where each function is used in the RF unit 104 as an example, the description is carried out here, however, it is possible to use each of the communication function, a state check function, and the retrieval function in the RF unit 105 also, as described above. Thus, it can operate as in the case of the RF unit 104 as described above.

### [Particular Use of Each Function]

Each of the RF units 104 and 105 which can use each of the functions as mentioned above can be separately controlled by the control unit 106. As will be described later in detail, the control unit 106 causes one of the RF units to be in an available state where the LAN connection is available with respect to the terminal unit 201, and causes the other RF unit to be in a standby state where the LAN connection is not established intentionally with respect to the terminal units 201.

Furthermore, the control unit 106 controls each of the RF units 104 and 105, and first selects a wireless channel suitable for communication by means of the retrieval function with respect to the RF unit which is caused to be in the available state. Then, it transmits a beacon signal periodically through the selected wireless channel, to notify the terminal unit 201 that the wireless channel is established, and receives an 802.11 Association signal from the terminal unit 201, to provide a state where a communication line may be connected with the terminal unit 201.

In this case, for a period until the communication line is connected with the terminal unit 201, the control unit 106 uses the retrieval function of the RF unit that is caused to be in the available state, such that a wireless channel which does not have noises with a high level, which is most suitable for communications, and which does not have a signal of another wireless LAN system may be retrieved from among the plurality of available wireless channels including the selected wireless channel. When a wireless channel is detected which is more suitable for communication than a previously selected channel, the wireless channel used for communication is changed.

After connecting the communication line with the terminal units 201, the control unit 106 controls the RF unit which is caused to be in the available state, to be able to mutually communicate with the terminal unit 201 by means of the communication function, and to use the state detection function, thus knowing the state of the selected wireless channel which is arranged to use for communication with the terminal unit 201.

Further, the control unit 106 controls the other RF unit which is caused to be in the standby state, such that by means of the retrieval function of the other RF unit in the standby state, a wireless channel suitable for communication is retrieved from among the plurality of wireless channels which are caused to be available except for the wireless channel selected as the channel used for communications.

Then, the control unit 106 compares the state of the retrieved wireless channel with the state of the wireless channel that is currently used for communications and detected by way of the state detection function of the RF unit which is caused to be in the available state. When a state of a newly retrieved wireless channel is better than the state of another wireless channel which is selected and being used for communications, the control unit 106 changes the wireless channel which is being used for communications.

This change of the wireless channel being used for communications is such that the RF unit which is caused to be in the available state is made to be in the standby state, and the RF unit which is caused to be in the standby state is made to be in the available state, thus continuing communications through the wireless channel suitable for communications which is detected when the RF unit caused to be in the available state is in the standby state.

Then, in the RF unit which is newly caused to be in the available state, the communication function is used such that communications with the terminal unit 201 may be carried out and the state of the wireless channel being used for communication by way of the state detection function may be detected. Further, in the RF unit which is newly caused to be in the standby state, a wireless channel suitable for communications is retrieved by means of the retrieval function, to thereby change to the wireless channel which is more suitable for communications, without interrupting the communications.

In this way, by controlling the two RF units 104 and 105 separately and using them properly, the wireless channels used for communications can be switched (changed) without substantially interrupting the communication process in operation, as well as the retrieval process for the optimal wireless channel is also continued, thus flexibly corresponding to the communication environment which may change every moment, and always carrying out communications properly.

In addition, as described above, the functions to retrieve the optimal wireless channel and to switch between the wireless channels are mainly performed by way of internal operation of the base apparatus 101. Therefore, any of various types of terminal units may be used as the terminal unit 201, if it operates in compliance with the wireless LAN International Standard specified by IEEE802.11. Further, the terminal unit 201 can be arranged to cooperate with the base apparatus 101 to which the present invention is applied, to fully provide the effects of the present invention.

Further, as can be seen from a comparison between the structure of a part of the terminal unit 201 as shown in FIG. 1 and the structure of the RF units 104 and 105 as shown in FIG. 2, the terminal unit 201 of this preferred embodiment has the same structure as that of the RF units 104 and 105, except that it is not provided with the reception signal level detecting unit 306 or the demodulation data deciding unit 307. As with the RF units 104 and 105 of the base apparatus 101, the terminal unit 201 can realize the communication function, modulate the data from the host apparatus, transmit the modulated data to the base apparatus 101, and also it can receive and demodulate the data from the base apparatus 101 and supply the modulated data to the host apparatus.

In this way, in the wireless LAN system 100 of this preferred embodiment, the control unit 106 of the base apparatus 101 has a significant advantage that it is arranged to separately control the RF unit 104 and the RF unit 105, and also to separately control the function used in the RF unit 104 and the RF unit 105.

### [Detailed Operation (Process) of Base Apparatus 101]

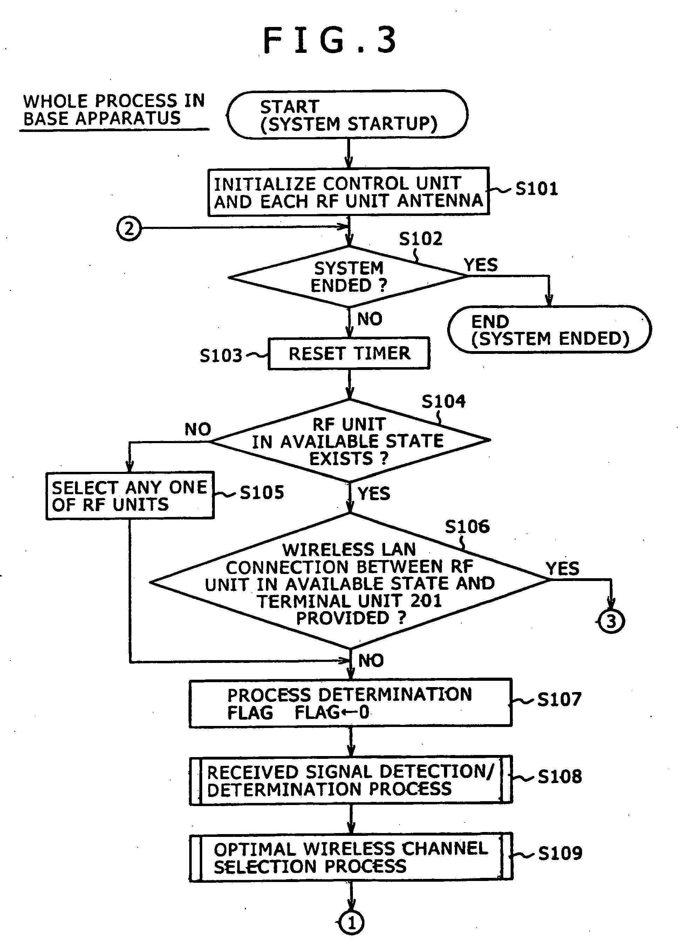

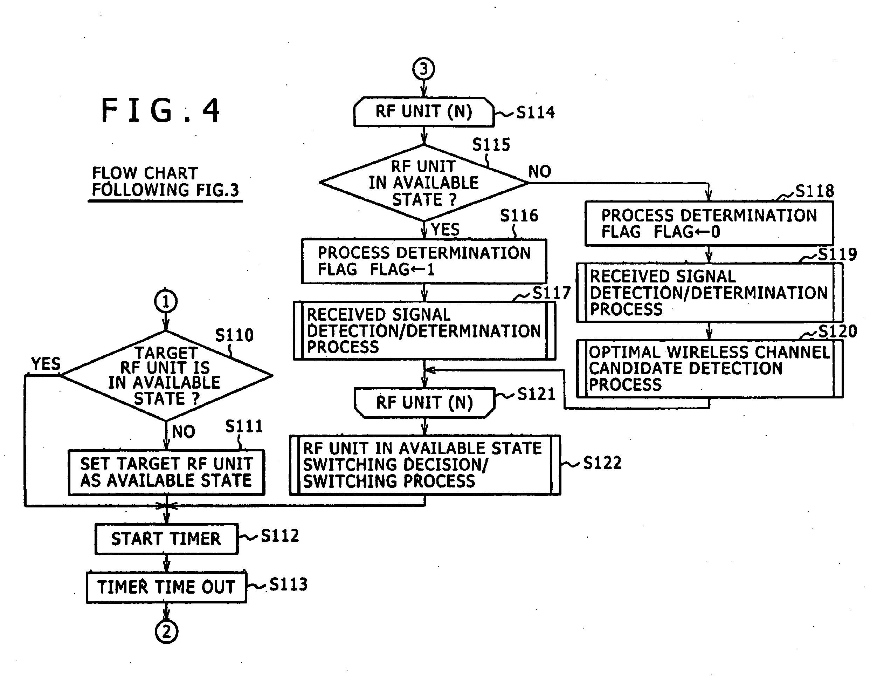

Next, operation of the base apparatus 101 of this preferred embodiment will be described in detail. Firstly, with reference to flow charts as shown in FIG. 3 and FIG. 4, the whole process performed in the base apparatus 101 will be described. The process in the flow charts as shown in FIG. 3 and FIG. 4 is a process mainly carried out by the control unit 106, in the case where power is supplied to the base apparatus 101, and a re-starting process is carried out.

When the base apparatus 101 is started, the control unit 106 performs processes as shown in FIG. 3 and FIG. 4, and initializes the control unit 106 itself, the RF units 104 and 105, and the antennas attached thereto, by means of a control signal supplied from the host apparatus through the interface unit 107 (step S101).

Then, being supplied with a termination control signal from the host apparatus etc., the control unit 106 judges whether or not instructions are issued to terminate the processing as a wireless LAN system (step S102). When it judges that it is instructed to terminate the processing, the processing as shown in FIG. 3 and FIG. 4 is terminated. When it judges that the instructions to terminate the system are not issued in the judgment process of step S102, the control unit 106 resets the timer 1064 provided for itself (step S103).

Then, based on its operating state and the operating states of the RF units 104 and 105 which are controlled by it, the control unit 106 judges whether there is an RF unit controlled to be in the available state or not (whether there is an RF unit in the available state or not) (step S104). As will be described later, the control unit 106 is arranged to record and store, for example, in a RAM 1063, information data indicating its operating state and the operating states of the RF units 104 and 105 which are controlled by it.

In the judgment process in step S104, when it is judged that there is no RF units in the available state yet, the control unit 106 selects one arbitrary RF unit to be changed into the available state (step S105), and the process moves to processing in step S107. Further, in the judgment process in step S104, when it is judged that there is already an RF unit in the available state, the control unit 106 judges whether or not the RF unit of in the available state is arranged to be able to connect the communication line and communicate with the terminal unit 201 (step S106).

When it judges in the judgment process in this step S106 that the communication line is not connected with the terminal unit 201, or when an arbitrary RF unit changed into the available state, as described, is selected in the processing in step S105, the control unit 106 sets a process determination flag FLAG which is a variable prepared beforehand to a value of 0 (zero) (step S107). This process determination flag FLAG is used in order to determine a processing state in a received signal detection / determination process routine to be described later.

Then, the control unit 106 controls the RF unit selected as it is to be changed into the available state in step S105, or controls the RF unit which is already changed into the available state but has not yet connected the communication line with the terminal unit 201. As will be described later in detail, it performs the received signal detection / determination process (step S108), detects a state of each of the plurality of available wireless channels, and carries out the process of selecting the optimal wireless channel by using the detection result (step S109). In addition, the retrieval function is realized by the processes in these step S108 and step S109.

Then, the control unit 106 moves the process to step S110 as shown in FIG. 4, and checks whether or not the RF unit to be controlled is already in the available state (step S110). When it judges that it is not in the available state, it sets the RF unit to be controlled as the available state (step S111).

In particular, this setting process updates information indicating that the RF unit to be controlled is changed into the available state to a RAM of the control unit 106, and alternately switches the RF unit between a transmission state and a reception state by means of the switching signal SW. As described above, when it is in the transmission state, a beacon signal is transmitted. When it is in the reception state, it is arranged to operate to receive the association signal from the terminal unit 201. Further, it is arranged that other RF units are maintained in the standby state, and information as to which RF unit is in the standby state can also be managed by updating it to the RAM 1063 of the control unit 106.

After the setup process in step S111, or in the judgment process in step S110, when it is judged that the RF unit to be controlled is already in the available state, the timer is started (step S112). Waiting until the timer times out (step S113), then the processes from step S102 et seq. as shown in FIG. 3 are repeated. In other words, the timer processes in step S112 and step S113 are processes for repeating the processes as shown in FIG. 3 and FIG. 4 at predetermined time intervals.

Thus, after initializing the control unit 106 and each of the RF units 104 and 105, any one of the RF units 104 and 105 is arbitrarily selected, the received signal detection / determination process and an optimal wireless channel selection process, as will be described later, are performed, and the selected RF unit is set as the available state and arranged to allow the wireless LAN connection with the terminal unit 201.

Further, in the judgment process in step S106 as shown in FIG. 3, when it is judged that the RF unit caused to be in the available state is arranged to be able to connect the communication line and communicate with the terminal unit 201, the control unit 106 moves the process to step S114 as shown in FIG. 4. The processes from this step S114 to step S121 are arranged to be performed one by one with respect to every RF unit provided for the base apparatus 101 of this preferred embodiment.

In addition, as shown also in FIG. 1, in the case of the base apparatus 101 of this preferred embodiment, the number of the RF units is two, which are the RF unit 104 (RF unit (0)) and the RF unit 105 (RF unit (1)). Therefore, in the case of the base apparatus 101 of this preferred embodiment, the processes from step S114 to step S121 will be performed for each of the RF unit 104 and the RF unit 105.

In particular, the control unit 106 first judges whether or not the RF unit caused to be processed is the RF unit changed into the available state (step S115). Since the setup process is already achieved in the case of the RF unit changed into the available state. In this judgment it is possible to judge whether or not it is the RF unit of the available state by referring to the information on this setup process, as described in the process of step S111.

In the judgment process of step S115, when it is judged that the RF unit to be processed is already caused to be in the available state, the process determination flag FLAG provided beforehand is set to a value of "1" (step S116). Then, the received signal detection / determination process to be described later in detail is performed (step S117). Thus, when a candidate for processing is the RF unit caused to be in the available state, it is arranged to detect a state of the wireless channel currently used for communications by way of the state detection function after setting up the flag. In other words, the state detection function is realized by way of the process in this step S117.

Further, in the judgment process of step S115, when it is judged that the RF unit to be processed is not changed into the available state, the RF unit is in the standby state. Therefore, firstly, the process determination flag FLAG is set to a value of 0 (zero) (step S118). The received signal detection / determination process as will be described later in detail is performed (step S119), and the optimal wireless channel selection process as will be described later in detail is performed (step S120). Therefore, the retrieval function is also realized by way of the processes in this step S119 and step S120.

Further, when the processes from step S114 to step S121 are completed with respect to all RF units, the control unit 106 also carries out a switching decision / switching process for the available state RF unit (step S122), as will be described later in detail. Then, the processes in step S112 et seq. as shown in FIG. 4 are carried out, and the processes in step S102 et seq. as shown in FIG. 3 are repeated at predetermined time intervals.

In addition, each of the RF units 104 and 105 is arranged to be in either the available state (state which allows wireless LAN connection with the terminal unit 201) or the standby state (state which does not allow the wireless LAN connection with the terminal unit 201) by means of the control signal CS from the control unit 106. However, all RF units are arranged to be in the standby state at the time of initialization in step S101 as shown in FIG. 3.

Further, as described above, the available state is realized, for example, such that the beacon signal is transmitted periodically through the antenna of the control unit for the RF unit to be changed into the available state, and the 802.11 Association signal is received. On the other hand, the standby state is realized such that the beacon signal from the antenna of the control unit for the RF unit to be changed into the standby state is stopped, and any 802.11 association signal is not received. Further, the RF unit to be in the available state is only one in the whole system of the base apparatus 101.

In this way, when the terminal unit 201 does not allow wireless LAN connection with the antenna and the RF unit in the available state, the detection / determination process for the received signal in the wireless channel that can be used only in the RF unit which is in the available state periodically at the timing which the timer provided for the control unit 106 is reset, and the selection process for the optimal wireless channel are performed. Thus, the wireless channel of the available state antenna which is waiting for the wireless LAN connection with the terminal unit 201 is always updated to the optimal channel.

Further, when the terminal unit 201 allows the wireless LAN connection with the antenna and the RF unit in the available state, only the detection / determination process for the received signal is performed with respect to the RF unit in the available state. However, in this case, the wireless channels are not switched one by one with respect to the RF units in the available state, but the detection / determination process for the received signal is performed only in the wireless channel being used by way of the wireless LAN connection with the terminal unit 201.

On the other hand, with respect to the antenna and the RF unit in the standby state, the detection / determination process for the received signal in each wireless channel which can be used, and a process of detecting an optimal wireless channel candidate CHCD which can be decided to be the optimal among channels other than the wireless channel set up at the available state antenna are performed.

Then, according to the results of the detection / determination process of the received signal acquired from the antenna and the RF unit in the available state which allow wireless LAN connection with the terminal unit 201, and the results of the optimal wireless channel candidate detection acquired from the antenna and the RF units in the standby state, two channels are compared, which are the wireless channel (present channel) currently used for the wireless LAN connection with the terminal unit 201 and the wireless channel (candidate channel) judged to be the optimal among the other wireless channels. When it is decided that the candidate channel is more suitable for communications than the current channel, the switching process for the available state RF unit as will be described later is performed.

Each of the above mentioned processes carried out for the antenna and the RF unit in the available state, and the antenna and the RF unit in the standby state is periodically performed at the timing which the timer 1064 of the control unit 106 is reset. According to the processes as described above, although allowing wireless LAN connection with the terminal unit 201, it is possible to further select an optimal wireless channel for communications from among wireless channels except for the wireless channel being used for the connection.

### [Received Signal Detection / Determination Process]

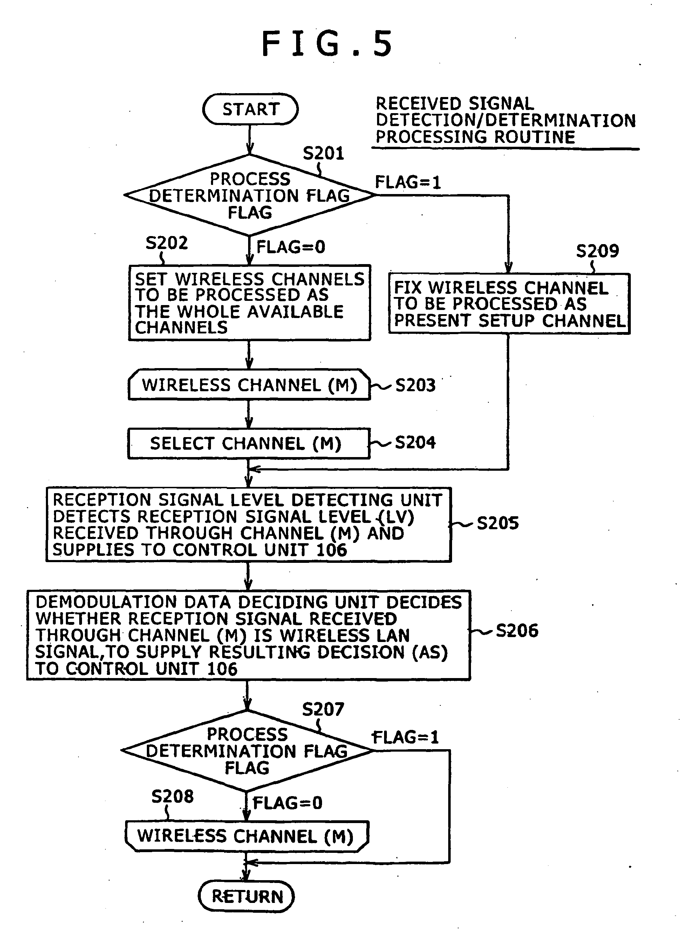

Next, the received signal detection / determination process performed in each of step S108 as shown in FIG. 3, step S117 as shown in FIG. 4, and step S119 will be described. FIG. 5 is a flow chart for explaining the received signal detection / determination process performed in each of the steps.

In this received signal detection / determination process, the control unit 106 first determines a value of a process determination FLAG (step S201). When the value of the process determination FLAG is 0 (zero), the RF unit to be controlled is not set as the available state (it is the RF unit in the standby state) so that all the wireless channels that are predetermined to be available are set to be processed (step S202). Thus, as to all wireless channels, the following processes in step S203 - step S208 are performed for each wireless channel.

In addition, in the processes, the character M in a wireless channel (M) represents a value within a range from "1" to the total number of the wireless channels. A series of processes in step S203 through step S208 are performed for each of the wireless channels, the number of which is determined by counting up by "1" from M=1 to the total number of the wireless channels.

Further, in this case, the control unit 106 controls the frequency synthesizer unit etc. to select a target wireless channel (step S204). In particular, the control unit 106 switches all the circuits of the RF transmission/reception unit 301, the frequency conversion unit 302, the modulation/demodulation unit 303, and the signal processing unit 304 to the reception state by means of the transmission/reception switching control signal SW. Then, it controls the frequency synthesizer unit 305 by means of the frequency synthesizer control signal CT, supplies the RF local signal RFL to the frequency conversion unit 302, and supplies the IF local signal IFL to the modulation/demodulation unit 303. These local signals RFL and IFL are supplied to a down conversion mixer in a destination circuit section, to select a signal of the target wireless channel.

In this way, the target wireless channel is selected, and an RF signal which is arranged to be transmitted through the selected wireless channel is received by way of the function of the antenna and the RF unit to be controlled. The reception signal level LV is detected (measured) by means of the reception signal level detecting unit 306 provided in the modulation/demodulation unit 303 of the RF unit, and this reception signal level LV is notified to the control unit 106 (step S205). This reception signal level LV is stored and held in a memory, such as the RAM of the control unit 106.

Next, by using the demodulation data deciding unit 307 provided in the signal processing unit 304 of the RF unit, based on the data format of a received signal, the control unit 106 decides whether or not the received signal is a wireless LAN signal, and notifies the control unit 106 of the resulting decision AS (step S206). The resulting decision AS as to whether or not this received signal is the wireless LAN signal is stored and held in a memory, such as the RAM 1063 of the control unit 106.

Then, the value of the process determination flag FLAG is checked (step S207). When the process determination FLAG is a value of 0 (zero), the processes in step S203 through step S208 are repeated with respect to the wireless channel (M) which is caused to be processed next. In other words, when the RF unit to be controlled is the RF unit in the standby state, in order to specify the optimal wireless channel for communications, all the plurality of available wireless channels are checked to see whether or not there is a noise or a signal of another wireless LAN system by using the retrieval function, and the resulting information is stored and held in a memory, such as the RAM of the control unit 106. When the processes are performed for all the plurality of available wireless channels, the processing as shown in FIG. 5 is terminated.

Further, in the judgment process in step S201, when a value of the process determination FLG is judged to be "1", the control unit 106 fixes the wireless channel to be processed to the setup wireless channel currently used for communications (step S209). For this fixed wireless channel, the processes in step S205 and step S206 are carried out, and the reception signal level LV and the resulting judgment AS as to whether it is a wireless LAN signal by way of the received signal are notified to the control unit 106 (step S205, step S206). After storing and holding these information data in the memory storage, such as the RAM of the control unit 106, the processing as shown in FIG. 5 is terminated.

In this way, the value of the process determination FLAG set up in advance is checked by way of the processing as shown in FIG. 3 and FIG. 4. In the RF unit having this value of 0 (zero) and changed into the standby state, with respect to each of the wireless channels which are caused to be selectable, the processes in step S202 through step 208 detect a state of each of the plurality of wireless channels which are selected and set up, and notify the control unit 106 of the resulting detection, thus realizing the retrieval function. On the other hand, the RF unit specified as being in the available state is arranged such that only information indicating the state of the wireless channel used for wireless LAN communications is detected and passed to the control unit 106 to realize the state detection function.

Thus, by using information collected by the function in step S205 and step S206, the control unit 106 is arranged to be able to select a wireless channel which has few noises, does not have unnecessary signals, such as the transmission/reception signal of another wireless LAN systems etc., and is suitable for communications.

### [Optimal Wireless Channel Selection Process]

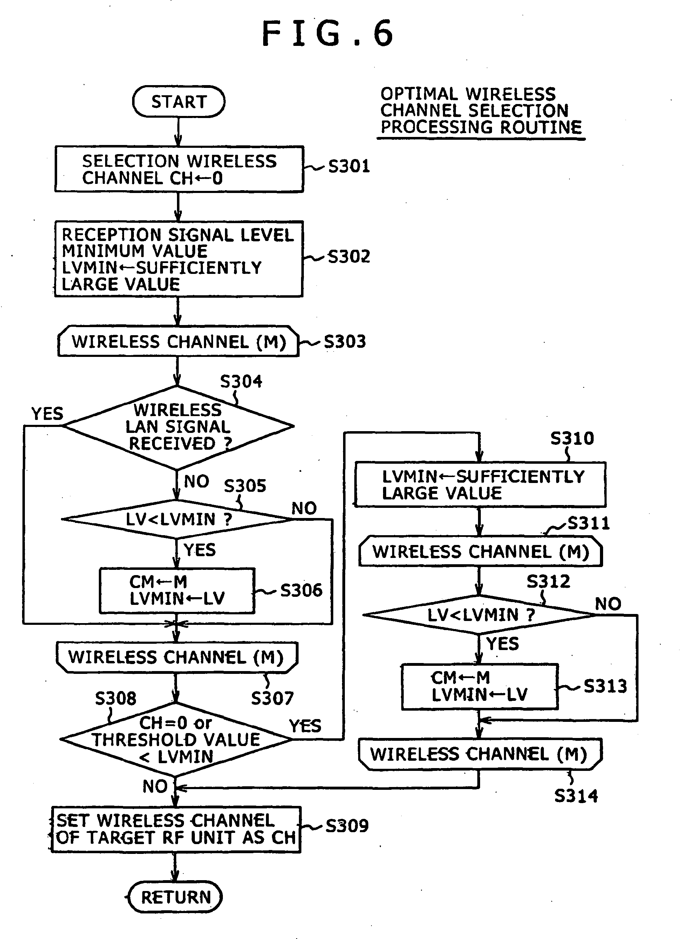

Next, the optimal wireless channel selection process performed in step S109 as shown in FIG. 3 will be described. FIG. 6 is a flow chart for explaining the optimal wireless channel selection process performed in step S109 as shown in FIG. 3.

This optimal wireless channel selection process selects the wireless channel which is most suitable for connecting the communication line with the terminal unit 201, by using the reception signal level LV and the resulting determination AS as to whether there is the wireless LAN signal in each wireless channel, which are stored and held in the memory, such as the RAM of the control unit 106, by way of the received signal detection / determination process as described with reference to FIG. 5.

Firstly, the control unit 106 sets in advance the variable CH for specifying a selection wireless channel to 0 (zero) (step S301), and sets a variable LVMIN indicating the minimum value of the reception signal level to a predetermined value, where a sufficiently large value is set as an initial value (step 5302).

Then, the control unit 106 carries out the processes in step S303 through step S307 for each of the plurality of available wireless channels. Also in the processes, the character M in the wireless channel (M) falls on a value within the range from "1" to the total number of the wireless channels.

In other words, the control unit 106 judges whether or not it has received the wireless LAN signal with reference to the resulting decision AS as to whether there is the wireless LAN signal regarding the channel which is currently subjected to the process among the information data which are stored and held in its own RAM, i.e., the wireless channel (M) (step S304).

In the judgment process in step S304, when it is judged that the wireless LAN signal is not received, the control unit 106 judges whether or not the reception signal level LV is smaller than the minimum reception signal level value LUMIN with reference to the reception signal level LV stored and held in its own RAM regarding the wireless channel (M) (step S305).

In the judgment process in step S305, when the reception signal level LV is judged to be smaller than the minimum reception signal level value LVMIN, the control unit 106 sets a value of M indicating the wireless channel (M) which is currently to be processed to a variable CH for specifying a selection wireless channel, and sets the reception signal level LV of the wireless channel (M) which is currently to be processed to the minimum reception signal level value LVMIN (step S306).

In addition, in step S304, when it is judged that the wireless LAN signal is received, or when the reception signal level LV is judged to be greater than the minimum reception signal level value LVMIX in the judgment process in step S305, the change of the variable CH and LVMIN in step S306 is not carried out.

As described above, a series of the thus performed processes in step S303 through step S307 are carried out for each of the wireless channels, the number of which is determined such that the wireless channel shown as the wireless channel (M) counts up from M=1 to the total number of the wireless channels by "1".

After completion of the processes in step S303 through step S307, the control unit 106 judges that the value of the variable CH which shows the wireless channel is 0 (zero) or whether or not the value of the minimum reception signal level value LVMIN is greater than a predetermined threshold value, for all of the plurality of available wireless channels (step S308).

Now, if the variable CH for specifying the selection wireless channel remains 0 (zero), it is possible to judge that there is an RF signal of another wireless LAN system or there is the noise with a signal level that is so large as to disturb communications, for all the plurality of wireless channels changed to be available. Further, also in the case where the minimum reception signal level value LVMIN is equal to or greater than the predetermined threshold value, it is possible to judge that there is the noise having the signal level which is so large as to disturb communications, for all the plurality of wireless channels that are changed to be available.

In the judgment process in this step S308, when it is judged that the value of the variable CH which shows the wireless channel is not 0 (zero), or the value of the minimum reception signal level value LVMIN is not greater than the predetermined threshold value, the wireless channel specified by the variable CH (selection wireless channel) is set up (selected) as the wireless channel used for communications by the RF unit to be controlled (step S309), and the processing as shown in FIG. 6 is terminated.

In the judgment process in step S308, when it is judged that the value of the variable CH which indicates the wireless channel is 0 (zero), or the minimum reception signal level value LVMIN is greater than the predetermined threshold value, there is an RF signal of another wireless LAN systems or there is the noise with the signal level so large as to disturb communications with respect to all the plurality of wireless channels that are changed to be available, as described above. Therefore, the processes in step S310 et seq. are performed and the process of selecting a wireless channel with the lowest reception signal level LV among those is carried out.

In other words, the control unit 106 sets the minimum reception signal level value LVMIN to a sufficiently large value (step S310). Then, the control unit 106 performs the processes in step S311 through step S314 for each of the plurality of available wireless channels. Also in the processes, as described above, the character M in the wireless channel (M) falls on the value within the range from "1" to the total number of the wireless channels.

Therefore, the control unit 106 judges whether or not the reception signal level LV is smaller than the minimum reception signal level value LVMIN with reference to the reception signal level LU, which is stored and held in its own RAM, regarding the wireless channel (M) (step S312). In the judgment process in this step S312, when it is judged that the reception signal level LV is not smaller than the minimum reception signal level value LVMIN, the control unit 106 is arranged to carry out the processes in step S311 through step S314 with respect to the following wireless channel.

In the judgment process in step S312, when the reception signal level LV is judged to be smaller than the minimum reception signal level value LVMIN, the control unit 106 sets the value of M indicating the wireless channel (M) which is currently to be processed to the variable CH for specifying the selection wireless channel, and sets the reception signal level LV of the wireless channel (M) which is currently to be processed to the minimum reception signal level value LVMIN (step S313). Then, it is arranged to carry out the processes in step S311 through step S314 with respect to the following wireless channel.

When the processes in step S311 through step S314 are completed with respect to all the available wireless channels, the control unit 106 sets (selects) the wireless channel (selection wireless channel) specified by the variable CH as the wireless channel which is used by the RF unit to be controlled for communications (step S309), and the processing as shown in FIG. 6 is terminated.

In this way, in the optimal wireless channel selection processing, the control unit 106 reads and compares the demodulation decision signals AS held in the memory, such as a RAM, of the respective wireless channels, and deletes the wireless channel whose wireless LAN signal is received, from selection candidates. Then, it determines a wireless channel having the lowest reception signal level LV among the remaining wireless channels, and the determined wireless channel is set to the wireless channel of the control unit antenna for the RF unit as the optimal wireless channel.

In addition, when the wireless LAN signal is detected for every channel, or when the reception signal level LV of the wireless channel selected by way of the determination process is greater than a certain threshold value, the wireless channel with the lowest reception signal level LV is determined among all wireless channels, and is set to the wireless channel of the control unit antenna for the RF unit as the optimal wireless channel.

Further, after completion of setup of the selection wireless channel in step S309, information on the set-up wireless channel is held, together with the demodulation decision data AS and the reception signal level LV, in the memory, such as the RAM of the control unit 106. The wireless channel setup of the antenna is carried out such that the control unit 106 supplies the control signal CT to the frequency synthesizer unit 305 of the antenna, and the RF local signal RFR is fixed which is supplied from the frequency synthesizer unit 305 to the frequency conversion unit 302.

### [Optimal Wireless Channel Candidate Detection Process]

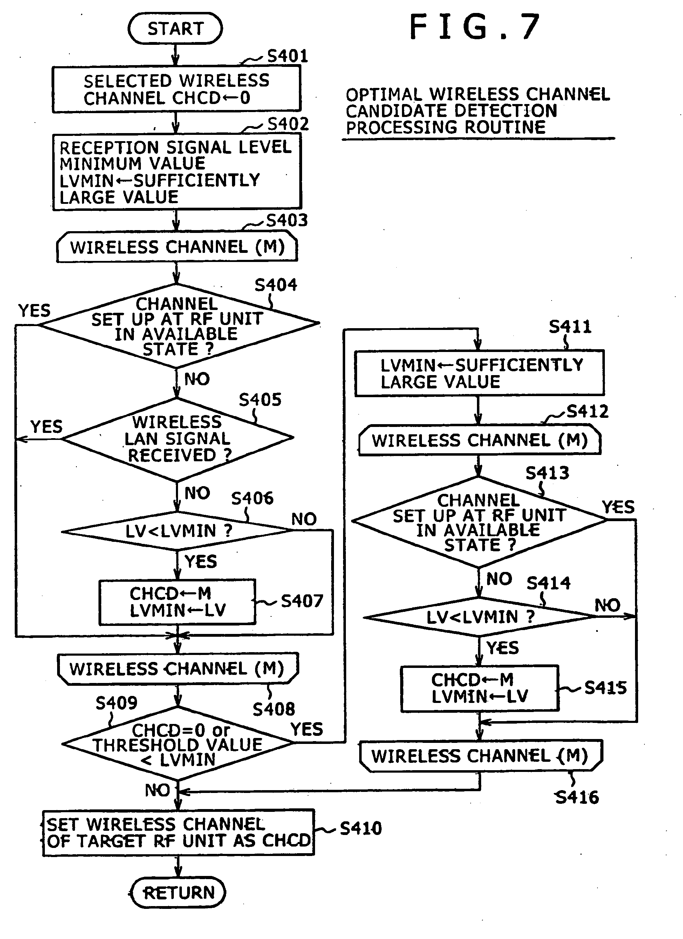

Next, an optimal wireless channel candidate detection process carried out in step S120 as shown in FIG. 4 will be described. FIG. 7 is a flow chart for explaining the optimal wireless channel candidate detection process carried out in step S120 as shown in FIG. 4. As described with reference to FIG. 4, the process shown in FIG. 7 is performed only for the control unit for the RF unit in the standby state.

Also in this optimal wireless channel candidate detection process, a wireless channel candidate which is most suitable for connecting the communication line with the terminal unit 201 is detected by using the reception signal level LV and the resulting determination AS as to whether there is the wireless LAN signal in each wireless channel, which are stored and held in the memory, such as the RAM of the control unit 106, by way of the received signal detection / determination process as described with reference to FIG. 5.

Firstly, the control unit 106 sets in advance a variable CHCD for specifying the selection wireless channel to 0 (zero) (step S401), and sets the variable LVMIN indicating the minimum value of the reception signal level to a predetermined value, where a sufficiently large value is set as an initial value (step S402).

Then, the control unit 106 carries out the processes in step S403 through step S408 for each of the plurality of available wireless channels. Also in the processes, the character M in the wireless channel (M) falls on a value within the range from "1 "to the total number of the wireless channels.

Then, with reference to the setup information on the wireless channel used for communications in the RF unit in the available state, the control unit 106 judges whether or not the channel which is currently subjected to the process, i.e., the wireless channel (M) is the wireless channel used for communications in the RF unit in the available state (step S404).

When it is judged in step S404 that it is not the wireless channel used for communications in the RF unit in the available state, the control unit 106 judges whether it has received the wireless LAN signal with reference to the resulting decision AS as to whether there is the wireless LAN signal regarding the channel which is currently subjected to this process, i.e., the wireless channel (M), among the information data which are stored and held in its own RAM (step S405).

In the judgment process in step S405, when it is judged that the wireless LAN signal is not received, the control unit 106 judges whether or not the reception signal level LV is smaller than the minimum reception signal level value LVMIN with reference to the reception signal level LV, which is stored and held in its own RAM, regarding the wireless channel (M) (step S406).

In the judgment process in step S406, when it is judged that the reception signal level LV is smaller than the minimum reception signal level value LVMIN, the control unit 106 sets the variable CHCD for specifying the selection wireless channel to the value of M indicating the wireless channel (M) which is currently to be processed, and sets the reception signal level LV of the wireless channel (M) which is currently to be processed to the minimum reception signal level value LVMIN (step S407).

In addition, when it is judged in step S404 that the channel which is currently subjected to this process is one that is used for communications in the RF unit in the available state, when it is judged in step S405 that the wireless LAN signal is received, or when it is judged in the judgment process in step S406 that the reception signal level LV is greater than the minimum reception signal level value LVMIN, the process of changing the variable CH and LVMIN in step S407 is not carried out.

As described above, a series of the thus performed processes in step S403 through step S408 are carried out for each of the wireless channels, the number of which is determined such that the wireless channel shown as the wireless channel (M) counts up from M=1 to the total number of the wireless channels by "1".

After completion of the processes in step S403 through step S408, the control unit 106 judges that the value of the variable CHCD which shows the wireless channel is 0 (zero) or whether or not the value of the minimum reception signal level value LVMIN is greater than a predetermined threshold value, for all of the plurality of available wireless channels (step S409).

Now, if the variable CH for specifying the selection wireless channel remains 0 (zero), it is possible to judge that there is an RF signal of another wireless LAN system or there is the noise with a signal level that is so large as to disturb communications, for all the plurality of wireless channels caused to be available. Further, also in the case where the minimum reception signal level value LVMIN is equal to or greater than the predetermined threshold value, it is possible to judge that there is the noise having the signal level which is so large as to disturb communications, for all the plurality of wireless channels that are changed to be available.

In the judgment process in this step S409, when it is judged that the value of the variable CHCD for specifying the wireless channel is not 0 (zero), or the value of the minimum reception signal level value LVMIN is not greater than the predetermined threshold value, the wireless channel specified by the variable CHCD (selection wireless channel) is set up (selected) as the wireless channel used for communications by the RF unit to be controlled (step S410), and the processing as shown in FIG. 7 is terminated.

In the judgment process in step S409, when it is judged that the value of the variable CHCD for specifying the wireless channel is 0 (zero), or the minimum reception signal level value LVMIN is greater than the predetermined threshold value, there is an RF signal of another wireless LAN systems or there is the noise with the signal level so large as to disturb communications, for all the plurality of wireless channels that are changed to be available, as described above. Therefore, the processes in step S411 et seq. are performed and the process of selecting a wireless channel with the lowest reception signal level LV among the plurality of available wireless channels is carried out.

In other words, the control unit 106 sets the minimum reception signal level value LVMIN to a sufficiently large value (step S411). Then, the control unit 106 performs the processes in step S412 through step S416 for each of the plurality of available wireless channels. Also in the processes, as described above, the character M in the wireless channel (M) falls on the value within the range from "1" to the total number of the wireless channels.

Thus, with reference to the setup information on the wireless channel used for communications in the RF unit in the available state, the control unit 106 judges whether or not the channel which is currently subjected to the process, i.e., the wireless channel (M) is the wireless channel used for communications in the RF unit in the available state (step S413).

When it is judged in step S413 that it is not the wireless channel used for communications in the RF unit in the available state, the control unit 106 judges whether or not the reception signal level LV is smaller than the minimum reception signal level value LVMIN with reference to the reception signal level LV, which is stored and held in its own RAM, regarding the wireless channel (M) (step S414).

When it is judged in step S413 that it is the wireless channel used for communications in the RF unit in the available state, or when it is judged in the judgment process in step S414 that the reception signal level LV is not smaller than the minimum reception signal level value LVMIN, the control unit 106 is arranged to carry out the processes in step S412 through step S416 with respect to the following wireless channel.

In the judgment process in step S414, when it is judged that the reception signal level LV is smaller than the minimum reception signal level value LVMIN, the control unit 106 sets the variable CHCD for specifying the selection wireless channel to the value of M indicating the wireless channel (M) which is currently to be processed, and sets the reception signal level LV of the wireless channel (M) which is currently to be processed to the minimum reception signal level value LVMIN (step S415). Then, the processes in step S412 through step S416 are performed for the following wireless channel.

When the processes in step S412 through step S416 are completed with respect to all the available wireless channels, the control unit 106 sets (selects) the wireless channel (selection wireless channel) specified by the variable CHCD as the wireless channel which is used by the RF unit to be controlled for communications (step S410), and the processing as shown in FIG. 7 is terminated.

In this way, in the optimal wireless channel candidate detection process, after carrying out the received signal detection / determination process in each RF unit in the standby state, the control unit 106 reads and compares the demodulation decision signals AS held in the memory, such as the RAM, of the respective wireless channels except for the wireless channel set up at the antenna of the RF unit which is currently in the available state, and deletes the wireless channel whose wireless LAN signal is received, from selection candidates. Then, it determines a wireless channel having the lowest reception signal level LV among the remaining wireless channels, and the determined wireless channel is set to the wireless channel of the RF unit as the optimal wireless channel candidate CHCD.

In addition, when the wireless LAN signal is detected for every channel, or when the reception signal level LV of the wireless channel selected by way of the determination process is greater than a certain threshold value, the reception signal level data LV of each channel is used such that the wireless channel with the lowest reception signal level is determined among all wireless channels except for the wireless channel set up at the antenna of the control unit of the RF control unit which is currently in the available state, and is set to the wireless channel of the RF unit as the optimal wireless channel candidate CHCD.

Further, after completion of setup of the selection wireless channel in step S309, information on the set-up wireless channel is held, together with the demodulation decision data AS and the reception signal level LV, in the memory, such as the RAM of the control unit 106. The wireless channel setup of the antenna is carried out such that the control unit 106 supplies the control signal CT to the frequency synthesizer unit 305 of the antenna, and the RF local signal RFR is fixed which is supplied from the frequency synthesizer unit 305 to the frequency conversion unit 302.

### [RF Unit Switching Decision and Switching Process]

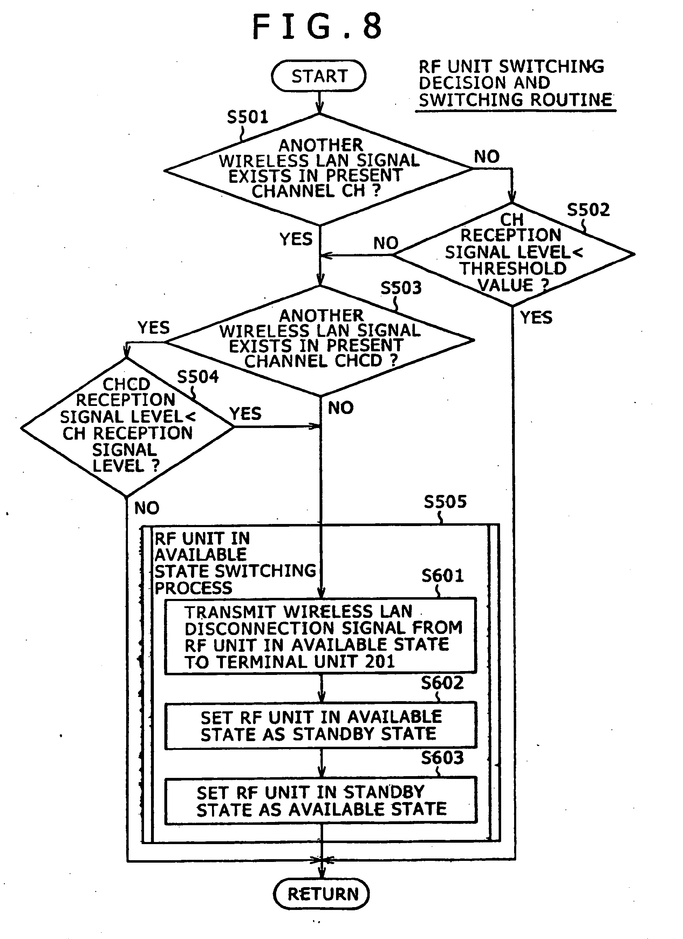

Next, an RF unit switching decision and a switching process which are performed in step S122 as shown in FIG. 4 will be described. FIG. 8 is a flow chart for explaining the RF unit switching decision and the switching process which are performed in step S122 as shown in FIG. 4. The processing shown in FIG. 8 is processing in the final stage for switching the wireless channels used for communications so that communications may be always carried out through a wireless channel in good conditions by switching between two RF units 104 and 105.

Firstly, with reference to a set-up state with respect to each wireless channel, or other information data, which are stored and held in its own memory, the control unit 106 judges whether there is another wireless LAN signal in the wireless channel CH selected as a channel used for communications in the RF unit currently in the available state (step S501).

In the judgment process in step S501, when it is judged that there is not another wireless LAN signal, it is judged whether or not the reception signal level LV of the wireless channel CH is smaller than a predetermined threshold value (step S502).
In the judgment process in step S502, when it is judged that there is not a signal greater than the threshold value either in the wireless channel CH selected so that it may be used for communications, it is not necessary to change the wireless channel used for communications, therefore the processing shown in FIG. 8 is terminated.

When it is judged in the judgment process in step S501 that there is another wireless LAN signal in the wireless channel CH selected so that it may be used for communications, or when it is judged in the judgment process in step S502 that there is a signal (noise) greater in level than the threshold value in the wireless channel CH selected so that it may be used for communications, the control unit 106 judges whether there is another wireless LAN signal in the wireless channel CHCD caused to be the candidate for the wireless channel used for communications (step S503).

In the judgment process in step S503, when it is judged that there is another wireless LAN signal in the candidate wireless channel CHCD, the control unit 106 judges whether or not the reception signal level of the signal of the candidate wireless channel CHCD is lower than the reception signal level of the signal of the wireless channel CH selected as the channel used for communications (step S504).

In the judgment process in step S504, when the reception signal level of the signal of the candidate wireless channel CHCD is higher than the reception signal level of the signal of the wireless channel CH already selected as the channel used for communications, changing the channels rather worsens the communication conditions. Therefore, the processing shown in FIG. 8 is terminated without doing anything.

When it is judged in the judgment process in step S503 that there is not another wireless LAN signal in the wireless channel CHCD caused to be the candidate for the wireless channel used for communications, or when it is judged in the judgment process in step S504 that the reception signal level of the signal of the candidate wireless channel CHCD is lower than the reception signal level of the signal of the wireless channel CH selected as the channel used for communications, the control unit 106 performs the process of switching the RF units to the available state (step S505), and the processing shown in FIG. 8 is terminated.

In addition, the process of switching the RF unit to the available state, which is performed in step S505, is such that the control unit 106 controls RF unit which is caused to be in the available state at the time, as shown also in FIG. 8, transmits a wireless LAN disconnection signal to the terminal unit 201, and disconnects the connected communication line (step S601).

Next, at that time, the RF unit which is caused to be in the available state is set as the standby state (step S602), then the RF unit which is in the standby state and in which the candidate for the wireless channel used for communications is set is set as the available state (step S603), and the process of switching to the RF unit in the available state is terminated.

In this way, even in the case where the communication line is connected with the terminal unit 201 to carry out communications, when conditions of the wireless channel used for communication worsen due to interference from a noise with high signal level, interference from the signal of another wireless LAN systems, etc., it is possible to select a wireless channel which is more suitable for communications and switch it automatically.

In this case, the optimal process of retrieving a wireless channel for communications is carried out through the RF unit other than the RF unit used for communication with the terminal unit 201, and therefore it is possible to retrieve the optimal wireless channel always, without disconnecting the wireless channel currently connected. In addition, as described above, the wireless channels are switched by switching the RF unit of the base apparatus 101, therefore quick switching can be attained without interrupting communications over a relatively long period of time.

Now, the processing shown in FIG. 8 is summarized. As described with reference to FIG. 3 and FIG. 4, in the stages preceding the RF unit switching decision and the switching process which are shown in FIG. 8, there are the received signal detection / determination process by means of the RF unit in the available state in the wireless channel currently used for the wireless LAN connection with the terminal unit 201, and the optimal wireless channel candidate detection process by means of the RF unit in the standby state. All of the results from these are held in the RAM of the control unit 106 etc.

Thus, in the case where the wireless LAN signal is detected in the wireless channel CH which is set up as the channel used for communications in the RF unit in the available state, if the wireless LAN signal is not detected in the optimal wireless channel candidate CHCD selected separately, the process of switching to the available state RF unit is carried out immediately.

Further, when the wireless LAN signal is detected in the optimal wireless channel candidate CHCD, the respective reception signal levels LV obtained in the wireless channel CH and the optimal wireless channel candidate CHCD are compared. When the reception signal level of the optimal wireless channel candidate CHCD is lower, the process of switching to the available state RF unit is carried out.

If the reception signal level obtained in the wireless channel CH set up as the channel used for communications is lower, the process of switching to the available state RF unit is not performed, but the processing is terminated. Further, when the wireless LAN signal is not detected in the wireless channel CH, the reception signal level obtained in the wireless channel CH is compared with a certain threshold value. When it is smaller than the threshold value, the process of switching to the control unit of the RF unit in the available state is not performed, but the processing is terminated. Conversely, when it is greater than the threshold value, as described above, the comparison with the reception signal level of the optimal wireless channel candidate CHCD and the decision are carried out.

As shown in step S503 of FIG. 8, the process of switching to the available state RF unit of the base apparatus 101 is performed such that disconnection of the wireless LAN connection → change of the available state of the RF unit into the standby state → change of the standby state of RF unit into the available state. As shown in FIG. 8, this switching process first transmits a signal (DISASSOCIATE frame) for explicitly disconnecting the wireless LAN connection to the terminal unit 201 through the antenna of the available state RF unit, thus disconnecting the wireless LAN connection with the terminal unit 201, and setting the RF unit as the standby state.

Next, the RF unit which has been in the standby state until then is set as the available state. An ESSID (Extended Service Set Identifier) for identifying the wireless network included in the beacon signal transmitted through the antenna of the control unit for the RF unit which is newly caused to be in the available state at this time uses the same one as the ESSID contained in the beacon signal transmitted through the antenna of the RF unit which has been in the available state until then.

Usually, on disconnection of the wireless LAN connection with the base apparatus which is an access point, the terminal unit of the wireless LAN system retrieves, by scanning, a wireless channel which can use the beacon signal containing the ESSID of the wireless LAN connection. Therefore, the terminal unit 201 can quickly discover the beacon signal transmitted through the antenna of the RF unit of the base apparatus 101 which is newly caused to be in the available state, after the wireless LAN connection with the base apparatus 101 is disconnected. Therefore, the wireless LAN connection can be provided through the RF unit which is newly caused to be in the available state via the antenna.

That is, it is arranged that the once-disconnected communication line is recovered quickly through another wireless channel in the wireless LAN system. In other words, by switching the available state RF unit and the antenna which can be used for the wireless LAN connection with the base apparatus 101, the wireless channel apparently used for the wireless LAN connection with the terminal unit 201 can be switched.

In this case, the RF unit (supposing in the available state) and the antenna which are used are only switched in the base apparatus 101. In fact, as for this process, since the available state RF unit may only be set as the standby state and the standby state RF unit may only be set as the available state, it is not necessary to perform a restart process for the wireless LAN system which generally requires the time in the order of a few seconds. Thus, it is possible to switch the wireless channel at a higher speed than the switching of the used wireless channel as in the conventional technique.

As such, in this preferred embodiment, in the wireless LAN system where the data transmission and reception is performed by way of the wireless LAN connection between the base apparatus and one or more station terminal units which are access points, it is arranged that at the same time as the data transmission and reception is performed, a clear wireless channel without the influence of the electric wave transmitted by another wireless LAN system is discovered efficiently, to prevent stabilities of the data transmission and reception from being damaged by the electric wave interference with another wireless LAN system.

Further, by switching the RF unit, the wireless channel to be used is switched, whereby the wireless channel switching process for the wireless LAN system may be accelerated, and user's convenience may be improved by shortening a stop period of the data transmission and reception, the stop occurring between the base apparatus and the station terminal unit.

As can be seen from the above description, in this preferred embodiment, regardless of whether the base apparatus of the wireless LAN system has established the wireless LAN connection between itself and the station terminal unit, the signal from another wireless LAN apparatus and the signal of more than a certain output level except for that of the relevant wireless LAN can always be identified as disturbance signals.

Further, after detecting the disturbance signals, the wireless channel which is most suitable for communications can automatically be selected from among the wireless channels which can be used, to be switched to the selected wireless channel.

As described above, the user of the wireless LAN system in accordance with the present invention can communicate always by way of the optimal wireless channel, without being conscious of the electric wave situation of the environment. Furthermore, it can be seen that by avoiding positively the wireless channel in which there are signals other than those from other wireless LAN system or wireless LAN, interference can be reduced and operating efficiencies of circumference wireless environment can be improved.

Further, according to the present invention, the wireless channel switching processing when the wireless LAN connection is provided between the base apparatus and the station terminal unit of the wireless LAN system is accelerated as compared with that of the conventional technology, whereby it is possible to shorten down time of data transmission/reception between the base apparatus and the station terminal unit which are switching the wireless channel and the user's advantage can be improved.

In addition, in the preferred embodiment as described above, the RF unit realizes the function of the wireless unit. The RF transmission/reception unit 301 mainly realizes the communication means in the wireless unit, and the frequency synthesizer unit 305 mainly realizes the channel selection means. The reception signal level detecting unit 306 realizes the detection means, and the demodulation data deciding unit 307 realizes the determination means. The control unit 106 mainly realizes the unit setting means, the channel setting means, the candidate channel setup means, and the switch control means. The reception signal level detecting unit 306, the demodulation data deciding unit 307, and the control means collaborate and realize the state detection means and the retrieval means.

### [Other Examples]

In the above preferred embodiments, the description is performed assuming that the switching of the wireless channel is realized only by switching the RF unit in the base apparatus 101, and there is neither change of any function, nor the need for addition on the terminal unit side. However, in order that the terminal unit may more promptly correspond to the switching of the RF unit, for example, prior to the switching of the RF unit, the terminal unit 201 is notified of information for specifying the newly used wireless channel, and it is also possible to realize the switching of the wireless channel, without performing the search (retrieval) process for the new wireless channel, on the terminal unit 201 side.

In this case, when the information for notifying the new wireless channel from the base apparatus 101 side is received on the terminal unit 201 side, it is possible to correspond only by adding a processing program for switching to the notified wireless channel without performing the search process for the wireless channel.

Further, in the above preferred embodiments, the present invention is described taking two RF units as an example, however, it is not limited thereto. Two or more RF units may be provided and switched in turn for use. Further, in recent years, in order to correspond to different LAN communications protocols, it is also possible to use two RF units corresponding to different protocols.

In such a case, a plurality of RF units, rather than one, are provided for each of the different protocols as in the above preferred embodiments, the RF unit in the available state and the RF unit in the standby state are switched in turn for use, so that the present invention can be applied to a base apparatus which needs to correspond to a plurality of protocols.

Further, although the above preferred embodiments are described taking only one terminal apparatus which can be connected with the base apparatus 101 as an example, but the present invention is not limited thereto. The present invention can also be applied to a wireless LAN system having a plurality of terminal apparatuses.

Further, the above preferred embodiments are described assuming that the base apparatus 101 and the terminal apparatus 201 are equivalent to the wireless LAN card mounted in the notebook PC and the wireless LAN module unit built in various types of electronic devices, such as the personal computer connected to the wireless LAN system. However, the present invention is not limited thereto.

In recent years, the base apparatus and a monitoring apparatus are also connected together by way of the wireless LAN. In this case, the base apparatus is provided with function for receiving television broadcast signals and function for connecting to the Internet, as well as function for connecting to external devices, such as a VTR (Video Tape Recorder) and a DVD (Digital Versatile Disc) player, and able to transmit image information data, audio information data, etc., such as the received television broadcast signals, information data obtained through the Internet, AV (Audio/Visual) data from an external device. Further, the monitoring apparatus in this case receives and processes the LAN signal from the base apparatus, displays the image information data on a display, such as its own LCD (Liquid Crystal Display), and can sound from its own speaker with respect to the audio information data.

The present invention can be applied when connecting the base apparatus with the monitoring apparatus which is considered as the terminal unit by way of the wireless LAN. In particular, in this case, since so-called AV data constituted by video data and audio data, such as television broadcast programs, movie contents recorded on the DVD, are data to be transmitted and received, it is possible to transmit and receive the video data and audio data without interruption, even if communication environment changes suddenly, thus it can be said that the present invention provides the applicable and effective technology.

Therefore, the present invention can be applied to the various electronic devices which constitute the wireless LAN system and function as the base apparatus as the access point.
The presently disclosed embodiments are therefore considered in all respects to be illustrative, and not restrictive. The scope of the invention is indicated by the appended claims, rather than the foregoing description, and all changes that come within the meaning and range of equivalence thereof are intended to be embraced therein.
The present invention contains subject mater related to Japanese Patent Application JP2025-168536 filed in the Japanese Patent Office on June 8, 2005.

## Claims

1. A base apparatus (101) for a wireless LAN system (100), comprising:
two or more wireless units (104, 105) including:
communication means for communicating with a terminal unit through a wireless communication channel;
channel selection means for selecting said wireless communication channel used by said communication means;
detection means for detecting a reception level of a noise signal received through said communication means;
determination means for determining whether or not a signal received through said communication means is a wireless LAN signal of another system; **characterized by** :
unit setting means for setting one of said two or more wireless units as a wireless unit for communication with said terminal unit (S105), and setting another as a wireless unit for retrieving an optimal wireless communication channel at the time of starting (S109);
channel setting means for selecting and setting up a wireless communication channel used for communications regarding said wireless unit for communications (S111);
state detection means for detecting a communication state of the wireless communication channel being used for communications, based on detection output from said detection means of said wireless unit for communications and determination output from said determination means, at every predetermined timing after connecting a communication line with said terminal unit by means of said wireless unit for communications (S117);
retrieval means for retrieving the optimal wireless communication channel, based on the detection output from said detection means and the determination output from said determination means, while changing an available wireless communication channel except for the wireless communication channel being used for communications, at every said predetermined timing, in said wireless unit for retrieving by controlling said channel selection means, after connecting the communication line with said terminal unit by means of said wireless unit for communications (S119);
candidate channel setup means for setting said optimal wireless communication channel retrieved by said retrieval means as a candidate for a wireless communication channel used for communications, regarding said wireless unit for retrieving (S120); and
switch control means for replacing said wireless unit for communications by said wireless unit for retrieving that is switched to the wireless unit for communication with the terminal unit, when the wireless communication channel as said candidate retrieved by said retrieval means has the communication state better than that of the wireless communication channel which is already used for communications, and newly switching a wireless unit except for the wireless unit for communications to a wireless unit for retrieving the optimal wireless communication channel (S122).

2. The base apparatus (101) for the wireless LAN system (100) according to claim 1, said base apparatus (101) being built in an electric apparatus as a wireless LAN card or a wireless LAN module.

3. A method of switching a wireless communication channel using two or more wireless units (104, 105) including: communication means for communicating with a terminal unit through the wireless communication channel; channel selection means for selecting said wireless communication channel used by said communication means; detection means for detecting a reception level of a noise signal received through said communication means; and determination means for determining whether or not a signal received through said communication means is a wireless LAN signal of another system, said method being **characterized by** the steps of:
setting one of said two or more wireless units as a wireless unit for communication with said terminal unit (S104), and setting another as a wireless unit for retrieving an optimal wireless communication channel at the time of starting (S109);
selecting and setting up a wireless communication channel used for communications regarding said wireless unit for communications (S111);
detecting a communication state of the wireless communication channel being used for communications, based on detection output from said detection means of said wireless unit for communications and determination output from said determination means, at every predetermined timing after connecting a communication line with said terminal unit by means of said wireless unit for communications (S117);
retrieving the optimal wireless communication channel, based on the detection output from said detection means and the determination output from said determination means, while changing an available wireless communication channel except for the wireless communication channel being used for communications, at every said predetermined timing, in said wireless unit for retrieving by controlling said channel selection means, after connecting the communication line with said terminal unit by means of said wireless unit for communications (S119);
setting said optimal wireless communication channel retrieved by said retrieval means as a candidate for a wireless communication channel used for communications, regarding said wireless unit for retrieving (S120); and
replacing said wireless unit for communications by said wireless unit for retrieving that is switched to the wireless unit for communication with the terminal unit, when the wireless communication channel as said candidate retrieved by said retrieval means has the communication state better than that of the wireless communication channel which is already used for communications, and newly switching a wireless unit except for the wireless unit for communications to a wireless unit for retrieving the optimal wireless communication channel (S122).

4. A wireless communication channel switching program for causing a computer of a base apparatus (101) of a wireless LAN system (100) having mounted therein two or more wireless units (104, 105) including: communication means for communicating with a terminal unit through a wireless communication channel; channel selection means for selecting said wireless communication channel used by said communication means; detection means for detecting a reception level of a noise signal received through said communication means; and determination means for determining whether or not a signal received through said communication means is a wireless LAN signal of another system, to implement the steps **characterized by**:
a unit setting step of setting one of said two or more wireless units as a wireless unit for communication with said terminal unit (S104), and setting another as a wireless unit for retrieving an optimal wireless communication channel at the time of starting (S109);
a channel setting step of selecting and setting up a wireless communication channel used for communications regarding said wireless unit for communications (S111);
a state detection step of detecting a communication state of the wireless communication channel being used for communications, based on detection output from said detection means of said wireless unit for communications and determination output from said determination means, at every predetermined timing after connecting a communication line with said terminal unit by means of said wireless unit for communications (S117);
a retrieval step of retrieving the optimal wireless communication channel, based on the detection output from said detection means and the determination output from said determination means, while changing an available wireless communication channel except for the wireless communication channel being used for communications, at every said predetermined timing, in said wireless unit for retrieving by controlling said channel selection means, after connecting the communication line with said terminal unit by means of said wireless unit for communications (S119);
a candidate channel setup step of setting said optimal wireless communication channel retrieved by said retrieval means as a candidate for a wireless communication channel used for communications, regarding said wireless unit for retrieving (S120); and
a switch control step of replacing said wireless unit for communications by said wireless unit for retrieving that is switched to the wireless unit for communication with the terminal unit, when the wireless communication channel as said candidate retrieved by said retrieval means has the communication state better than that of the wireless communication channel which is already used for communications, and newly switching a wireless unit except for the wireless unit for communications to a wireless unit for retrieving the optimal wireless communication channel (S122).

5. A recording medium having recorded therein a wireless communication channel switching program, which is computer readable, for causing a computer of a base apparatus (101) of a wireless LAN system (100) having mounted therein two or more wireless units (104, 105) including: communication means for communicating with a terminal unit through a wireless communication channel; channel selection means for selecting said wireless communication channel used by said communication means; detection means for detecting a reception level of a noise signal received through said communication means; and determination means for determining whether or not a signal received through said communication means is a wireless LAN signal of another system, to implement the steps **characterized by** :
a unit setting step of setting one of said two or more wireless units as a wireless unit for communication with said terminal unit (S104), and setting another as a wireless unit for retrieving an optimal wireless communication channel at the time of starting (S109);
a channel setting step of selecting and setting up a wireless communication channel used for communications regarding said wireless unit for communications (S111);
a state detection step of detecting a communication state of the wireless communication channel being used for communications, based on detection output from said detection means of said wireless unit for communications and determination output from said determination means, at every predetermined timing after connecting a communication line with said terminal unit by means of said wireless unit for communications (S117);
a retrieval step of retrieving the optimal wireless communication channel, based on the detection output from said detection means and the determination output from said determination means, while changing an available wireless communication channel except for the wireless communication channel being used for communications, at every said predetermined timing, in said wireless unit for retrieving by controlling said channel selection means, after connecting the communication line with said terminal unit by means of said wireless unit for communications (S119);
a candidate channel setup step of setting said optimal wireless communication channel retrieved by said retrieval means as a candidate for a wireless communication channel used for communications, regarding said wireless unit for retrieving (S120); and
a switch control step of replacing said wireless unit for communications by said wireless unit for retrieving that is switched to the wireless unit for communication with the terminal unit, when the wireless communication channel as said candidate retrieved by said retrieval means has the communication state better than that of the wireless communication channel which is already used for communications, and newly switching a wireless unit except for the wireless unit for communications to a wireless unit for retrieving the optimal wireless communication channel (S122).

## Patentansprüche

1. Basisvorrichtung (101) für ein drahtloses LAN-System (100), umfassend:
zwei oder mehrere drahtlose Einheiten (104, 105), die enthalten:
Kommunikationsmittel, um mit einem Endgerät durch einen drahtlosen Kommunikationskanal zu kommunizieren;
Kanalauswahlmittel, um den drahtlosen Kommunikationskanal, der durch die Kommunikationsmittel verwendet wird, auszuwählen;
Erkennungsmittel, um ein Empfangsniveau eines Störsignals, das durch die Kommunikationsmittel empfangen wird, zu erkennen;
Bewertungsmittel, um zu bewerten, ob ein Signal, das durch die Kommunikationsmittel empfangen wird, ein drahtloses LAN-Signal eines anderen Systems ist oder nicht; **gekennzeichnet durch**
Einheiten-Einstellmittel, um eine der zwei oder der mehreren drahtlosen Einheiten als drahtlose Einheit zur Kommunikation mit dem Endgerät (S105) einzustellen; und um eine andere als eine drahtlose Einheit zum Empfangen eines optimalen drahtlosen Kommunikationskanals zum Zeitpunkt des Startens (S109) einzustellen;
Kanaleinstellmittel, um einen drahtlosen Kommunikationskanal auszuwählen und einzustellen, der für Kommunikationen hinsichtlich der drahtlosen Kommunikationseinheit (S111) verwendet wird;
Statuserkennungsmittel, um einen Kommunikationsstatus des drahtlosen Kommunikationskanals, der für die Kommunikation verwendet wird, auf Grundlage des Erkennungsausgangs von den Erkennungsmitteln der drahtlosen Kommunikationseinheit und des Bewertungsausgangs von den Bewertungsmitteln zu jedem vorgegebenen Zeitpunkt nach dem Verbinden einer Kommunikationsleitung mit dem Endgerät mittels der drahtlosen Kommunikationseinheit (S117), zu erkennen;
Abfragemittel, um den optimalen drahtlosen Kommunikationskanal auf Grundlage des Erkennungsausgangs von den Erkennungsmitteln und des Bewertungsausgangs von den Bewertungsmitteln abzufragen, während ein verfügbarer drahtloser Kommunikationskanal mit Ausnahme des drahtlosen Kommunikationskanals, der für die Kommunikationen verwendet wird, zu jedem vorgegebenen Zeitpunkt in der drahtlosen Einheit geändert wird, um **durch** Steuerung der Kanalauswahlmittel nach dem Verbinden der Kommunikationsleitung mit dem Endgerät bzw. der Anschlusseinheit mittels der drahtlosen Kommunikationseinheit (S119) abzufragen;
Kandidatenkanal-Einstellmittel, um den optimalen drahtlosen Kommunikationskanal, der **durch** die Abfragemittel abgefragt wird, als einen Kandidaten für einen drahtlosen Kommunikationskanal, der für die Kommunikationen verwendet wird, einzustellen unter Berücksichtigung der drahtlosen Abfrageeinheit (S120); und
Schaltungssteuermittel, um die drahtlose Kommunikationseinheit durch die drahtlose Abfrageeinheit zu ersetzen, welche in die drahtlose Kommunikationseinheit mit dem Endgerät umgeschaltet wird, wenn der drahtlose Kommunikationskanal als der Kandidat, der **durch** die Abfragemittel abgefragt ist, den besseren Kommunikationsstatus aufweist als jener des drahtlosen Kommunikationskanals, welcher bereits für die Kommunikationen verwendet wird, und neuerdings um eine drahtlose Einheit mit Ausnahme der drahtlosen Kommunikationseinheit in eine drahtlose Abfrageeinheit des optimalen drahtlosen Kommunikationskanals (S122) umzuschalten.

2. Basisvorrichtung (101) für das drahtlose LAN-System (100) nach Anspruch 1, wobei die Basisvorrichtung (101) in einer elektrischen Vorrichtung als eine drahtlose LAN-Karte oder ein drahtloses LAN-Modul ausgebildet ist.

3. Verfahren zum Schalten eines drahtlosen Kommunikationskanals mittels zwei oder mehrerer drahtloser Einheiten (104, 105), enthaltend:
Kommunikationsmittel, um mit einem Endgerät bzw. einer Anschlusseinheit durch den drahtlosen Kommunikationskanal zu kommunizieren; Kanalauswahlmittel, um den drahtlosen Kommunikationskanal, der durch die Kommunikationsmittel verwendet wird, auszuwählen; Erkennungsmittel, um ein Empfangsniveau eines Störsignals, das durch die Kommunikationsmittel empfangen wird, zu erkennen; und Bewertungsmittel, um zu bewerten, ob ein Signal, das durch die Kommunikationsmittel empfangen wird, ein drahtloses LAN-Signal eines anderen Systems ist oder nicht, wobei das Verfahren durch die Schritte **gekennzeichnet** ist:
Einstellen einer der zwei oder der mehreren drahtlosen Einheiten als eine drahtlose Kommunikationseinheit mit dem Endgerät (S105), und Einstellen einer anderen als eine drahtlose Abfrageeinheit eines optimalen drahtlosen Kommunikationskanals zum Zeitpunkt des Startens (S 109);
Auswählen und Einstellen eines drahtlosen Kommunikationskanals, der für die Kommunikationen hinsichtlich der drahtlosen Kommunikationseinheit (S111) verwendet wird;
Erkennen eines Kommunikationsstatus bzw. -zustandes des drahtlosen Kommunikationskanals, der für Kommunikationen verwendet wird, auf Grundlage des Erkennungsausgangs von den Erkennungsmitteln der drahtlosen Kommunikationseinheit und des Bewertungsausgangs von den Bewertungsmitteln zu jedem vorgegebenen Zeitpunkt nach dem Verbinden einer Kommunikationsleitung mit dem Endgerät mittels der drahtlosen Kommunikationseinheit (S117);
Abfragen des optimalen drahtlosen Kommunikationskanals auf Grundlage des Erkennungsausgangs von den Erkennungsmitteln und des Bewertungsausgangs von den Bewertungsmitteln, während ein verfügbarer drahtloser Kommunikationskanal mit Ausnahme des drahtlosen Kommunikationskanals, der für Kommunikationen verwendet wird, zu jedem vorgegebenen Zeitpunkt in die drahtlose Einheit zum Abfragen durch das Steuern der Kanalauswahlmittel nach dem Verbinden der Kommunikationsleitung mit dem Endgerät mittels der drahtlosen Kommunikationseinheit (S119) umgeschaltet wird;
Einstellen des optimalen drahtlosen Kommunikationskanals, der durch die Abfragemittel als ein Kandidat für einen drahtlosen Kommunikationskanal, der für Kommunikationen verwendet wird, unter Berücksichtigung der drahtlosen Einheit zum Abfragen (S120) abgefragt wird; und
Ersetzen der drahtlosen Kommunikationseinheit durch die drahtlose Abfrageeinheit, welche in die drahtlose Kommunikationseinheit mit dem Endgerät umgeschaltet wird, wenn der drahtlose Kommunikationskanal als Kandidat, der durch die Abfragemittel abgefragt wird, den besseren Kommunikationsstatus aufweist als jener des drahtlosen Kommunikationskanals, welcher bereits für Kommunikationen verwendet wird, und neuerdings das Umschalten einer drahtlosen Einheit mit Ausnahme der drahtlosen Kommunikationseinheit in eine drahtlose Abfrageeinheit des optimalen drahtlosen Kommunikationskanals (S122).

4. Drahtloses Kommunikationskanal-Umschaltprogramm, um einen Computer einer Basisvorrichtung (101) eines drahtlosen LAN-Systems (100), das darin zwei oder mehrere drahtlose Einheiten (104, 105) montiert hat, enthaltend: Kommunikationsmittel, um mit einem Endgerät durch einen drahtlosen Kommunikationskanal zu kommunizieren; Kanalauswahlmittel, um den drahtlosen Kommunikationskanal, der durch die Kommunikationsmittel verwendet wird, auszuwählen; Erkennungsmittel, um ein Empfangsniveau eines Störsignals, das durch die Kommunikationsmittel empfangen wird, zu erkennen; und Bewertungsmittel, um zu bewerten, ob ein Signal, das durch die Kommunikationsmittel empfangen wird, ein drahtloses LAN-Signal eines anderen Systems ist oder nicht, zu veranlassen, die Schritte zu implementieren, die **gekennzeichnet sind durch**:
einen Einheit-Einstellschritt des Einstellens einer der zwei oder der mehreren drahtlosen Einheiten als eine drahtlose Kommunikationseinheit mit dem Endgerät (S105), und das Einstellen eines anderen als eine drahtlose Abfrageeinheit eines optimalen drahtlosen Kommunikationskanals zu dem Zeitpunkt des Startens (S109);
einen Kanal-Einstellschritt des Auswählens und des Einstellens eines drahtlosen Kommunikationskanals, der für Kommunikationen hinsichtlich der drahtlosen Kommunikationseinheit (S111) verwendet wird;
einen Status-Erkennungsschritt des Erkennens eines Kommunikationsstatus des drahtlosen Kommunikationskanals, der für Kommunikationen verwendet wird, auf Grundlage des Erkennungsausgangs von den Erkennungsmitteln der drahtlosen Kommunikationseinheit und des Bewertungsausgangs von den Bewertungsmitteln zu jedem vorgegebenen Zeitpunkt nach dem Verbinden einer Kommunikationsleitung mit dem Endgerät mittels der drahtlosen Kommunikationseinheit (S 117);
einen Abfrageschritt des Abfragens des optimalen drahtlosen Kommunikationskanals auf Grundlage des Erkennungsausgangs von den Erkennungsmitteln und des Bewertungsausgangs von den Bewertungsmitteln, während ein verfügbarer drahtloser Kommunikationskanal mit Ausnahme des drahtlosen Kommunikationskanals, der für Kommunikationen verwendet wird, zu jedem vorgegebenen Zeitpunkt in die drahtlose Abfrageeinheit **durch** das Steuern der Kanalauswahlmittel nach dem Verbinden der Kommunikationsleitung mit dem Endgerät mittels der drahtlosen Kommunikationseinheit (S119) umgeschaltet wird;
einen Kandidatenkanal-Einstellschritt des Einstellens des optimalen drahtlosen Kommunikationskanals, der **durch** die Abfragemittel abgefragt wird, als ein Kandidat für einen drahtlosen Kommunikationskanal, der für Kommunikationen verwendet wird, hinsichtlich der drahtlosen Abfrageeinheit (S120); und
einen Schaltungs-Steuerschritt des Ersetzens der drahtlosen Kommunikationseinheit **durch** die drahtlose Abfrageeinheit, welche in die drahtlose Einheit für Kommunikation mit dem Endgerät umgeschaltet ist, wenn der drahtlose Kommunikationskanal als Kandidat, der **durch** die Abfragemittel abgefragt wird, den besseren Kommunikationsstatus aufweist als jener des drahtlosen Kommunikationskanals, welcher bereits für Kommunikationen verwendet wird, und neuerdings das Umschalten einer drahtlosen Einheit mit Ausnahme der drahtlosen Kommunikationseinheit in eine drahtlose Abfrageeinheit des optimalen drahtlosen Kommunikationskanals (S122).

5. Aufnahmemedium, in dem ein drahtloses Kommunikationskanal-Umschaltprogramm gespeichert ist, welches computerlesbar ist, um einen Computer einer Basisvorrichtung (101) eines drahtlosen LAN-Systems (100), in dem zwei oder mehrere drahtlose Einheiten (104, 105) montiert sind, und das enthält: Kommunikationsmittel, um mit einem Endgerät durch einen drahtlosen Kommunikationskanal zu kommunizieren; Kanalauswahlmitteln, um den drahtlosen Kommunikationskanal auszuwählen, der durch die Kommunikationsmittel verwendet wird; Erkennungsmittel, um ein Empfangsniveau eines Störsignals, das durch die Kommunikationsmittel empfangen wird, zu erkennen und Bewertungsmittel, um zu bewerten, ob ein Signal, das durch die Kommunikationsmittel empfangen wird, ein drahtloses LAN-Signal eines anderen Systems ist oder nicht, zu veranlassen, die Schritte zu implementieren, die **gekennzeichnet sind durch**:
einen Einheit-Einstellschritt des Einstellens einer der zwei oder der mehreren drahtlosen Einheiten als eine drahtlose Kommunikationseinheit mit dem Endgerät (S105), und das Einstellen einer anderen als einer drahtlosen Abfrageeinheit eines optimalen drahtlosen Kommunikationskanals zu dem Zeitpunkt des Startens (S109);
einen Kanal-Einstellschritt des Auswählens und des Einstellens eines drahtlosen Kommunikationskanals, der für Kommunikationen verwendet wird, hinsichtlich der drahtlosen Kommunikationseinheit (S111);
einen Status-Erkennungsschritt des Erkennens eines Kommunikationsstatus des drahtlosen Kommunikationskanals, der für Kommunikationen verwendet wird, auf Grundlage des Erkennungsausgangs von den Erkennungsmitteln der drahtlosen Kommunikationseinheit und des Bewertungsausgangs von den Bewertungsmitteln zu jedem vorgegebenen Zeitpunkt nach dem Verbinden einer Kommunikationsleitung mit dem Endgerät mittels der drahtlosen Kommunikationseinheit (S117);
einen Abfrageschritt des Abfragens des optimalen drahtlosen Kommunikationskanals auf Grundlage des Erkennungsausgangs von den Erkennungsmitteln und des Bewertungsausgangs von den Bewertungsmitteln, während ein verfügbarer drahtloser Kommunikationskanal mit Ausnahme des drahtlosen Kommunikationskanals, der für Kommunikationen verwendet wird, zu jedem vorgegebenen Zeitpunkt in die drahtlose Abfrageeinheit **durch** das Steuern der Kanalauswahlmittel nach dem Verbinden der Kommunikationsleitung mit dem Endgerät mittels der drahtlosen Kommunikationseinheit (S119) umgeschaltet wird;
einen Kandidatenkanal-Einstellschritt des Einstellens des optimalen drahtlosen Kommunikationskanals, der **durch** die Abfragemittel als ein Kandidat für einen drahtlosen Kommunikationskanal, der für Kommunikationen verwendet wird, hinsichtlich der drahtlosen Abfrageeinheit (S120) abgefragt wird; und
einen Schaltungssteuerschritt des Ersetzens der drahtlosen Kommunikationseinheit **durch** die drahtlose Abfrageeinheit, welche in die drahtlose Kommunikationseinheit mit dem Endgerät umgeschaltet wird, wenn der drahtlose Kommunikationskanal als der Kandidat, der **durch** die Abfragemittel abgefragt wird, den besseren Kommunikationsstatus aufweist als jener des drahtlosen Kommunikationskanals, welcher bereits für Kommunikationen verwendet wird, und neuerdings das Umschalten einer drahtlosen Einheit mit Ausnahme der drahtlosen Kommunikationseinheit in eine drahtlose Abfrageeinheit des optimalen drahtlosen Kommunikationskanals (S 122).

## Revendications

1. Dispositif de base (101) pour un système LAN sans fil (100), comportant :
deux unités sans fil ou plus (104, 105) comprenant :
des moyens de communication pour communiquer avec une unité terminale par l'intermédiaire d'un canal de communication sans fil ;
des moyens de sélection de canaux pour sélectionner ledit canal de communication sans fil utilisé par lesdits moyens de communication ;
des moyens de détection pour détecter un niveau de réception d'un signal de bruit reçu par l'intermédiaire desdits moyens de communication ;
des moyens de détermination pour déterminer si oui ou non un signal reçu par l'intermédiaire desdits moyens de communication est un signal LAN sans fil d'un autre système ; **caractérisé par** :
des moyens de réglage pour régler laquelle desdites deux unités sans fil ou plus en tant qu'unité sans fil pour une communication avec ladite unité terminale (S105), et régler l'autre en tant qu'unité sans fil de récupération d'un canal de communication sans fil optimal au moment du début (S109) ;
des moyens de réglage de canal pour sélectionner et configurer un canal de communication sans fil utilisé pour une communication concernant ladite unité sans fil de communications (S111) ;
des moyens de détection d'état pour détecter un état de communication du canal de communication sans fil utilisé pour des communications, en fonction de la sortie de détection provenant desdits moyens de détection de ladite unité sans fil pour des communications et une sortie détermination provenant desdits moyens de détermination, à chaque moment prédéterminé après connexion d'une ligne de communication à ladite unité terminale au moyen de ladite unité sans fil de communications (S117) ;
des moyens de récupération pour récupérer le canal de communication sans fil optimal, en fonction de la sortie de détection provenant des desdits moyens de détection, et la sortie de détermination provenant desdits moyens de détermination, tout en modifiant un canal de communication sans fil disponible sauf pour le canal de communication sans fil utilisé pour les communications, à chaque moment prédéterminé, dans ladite unité sans fil pour une récupération en contrôlant lesdits moyens de sélection de canaux, après connexion à la ligne de communication avec ladite unité terminale au moyen de ladite unité sans fil de communications (S119) ;
des moyens de configuration de canal candidat pour configurer ledit canal de communication sans fil optimal récupéré par lesdits moyens de récupération en tant que candidat pour un canal de communication sans fil utilisé pour les communications, concernant ladite unité sans fil de récupération (S120) ; et
des moyens de contrôle de commutateur pour remplacer ladite unité sans fil de communications par ladite unité sans fil de récupération qui est commutée à une unité sans fil pour une communication avec l'unité terminale, lorsque le canal de communication sans fil en tant que candidat récupéré par lesdits moyens de récupération présente un état de communication meilleur que celui du canal de communication sans fil qui est déjà utilisé pour des communications, et pour commuter nouvellement une unité sans fil sauf pour l'unité sans fil de communications à une unité sans fil pour récupérer le canal de communication sans fil optimal (S122).

2. Dispositif de base (101) pour le système LAN sans fil (100) selon la revendication 1, ledit dispositif de base (101) étant inséré dans un appareil électrique en tant que carte LAN sans fil ou module LAN sans fil.

3. Procédé de commutation d'un canal de communication sans fil utilisant deux unités sans fil ou plus (104, 105) comportant : des moyens de communication pour communiquer avec une unité terminale par l'intermédiaire du canal de communication sans fil ; des moyens de sélection de canal pour sélectionner ledit canal de communication sans fil utilisé par ledit moyen de communication ; des moyens de détection pour détecter un niveau de réception d'un signal de bruit reçu par l'intermédiaire dudit moyen de communication ; et des moyens de détermination pour déterminer si oui ou non un signal reçu par l'intermédiaire desdits moyens de communication est un signal LAN sans fil d'un autre système, ledit procédé étant **caractérisé par** les étapes consistant à :
Régler l'une desdites deux unités sans fil ou plus en tant qu'unité sans fil pour une communication avec ladite unité terminale (S105), et régler l'autre en tant qu'unité sans fil pour récupérer un canal de communication sans fil optimal au moment du début (S109) ;
sélectionner et configurer un canal de communication sans fil utilisé pour des communications selon ladite unité sans fil de communication ;
détecter un état de communication du canal de communication sans fil utilisé pour des communications, en fonction d'une sortie de détection provenant desdits moyens de détection de ladite unité sans fil de communication et une sortie de détermination provenant desdits moyens de détermination, à chaque moment prédéterminé après connexion d'une ligne de communication à ladite unité terminale au moyen de ladite unité de communication sans fil (S117) ;
récupérer le canal de communication sans fil optimal, en fonction de la sortie de détection provenant desdits moyens de détection et de la sortie de détermination provenant desdits moyens de détermination, tout en modifiant un canal de communication sans fil disponible sauf pour le canal de communication sans fil utilisé pour des communications, à chaque moment prédéterminé, dans ladite unité sans fil de récupération en contrôlant lesdits moyens de sélection de canal, après connexion de la ligne de communication à ladite unité terminale au moyen de ladite unité de communication sans fil (S119) ;
régler ledit canal de communication sans fil optimal récupéré par lesdits moyens de récupération en tant que candidat pour un canal de communication sans fil utilisé pour des communications, concernant ladite unité de récupération sans fil (S120) ; et
remplacer ladite unité sans fil de communication par ladite unité sans fil de récupération qui est commutée à l'unité sans fil de communication avec l'unité terminale, lorsque le canal de communication sans fil en tant que candidat récupéré par lesdits moyens de récupération présente un état de communication meilleur que celui du canal de communication sans fil qui est déjà à utilisé pour des communications, et commuter nouvellement une unité sans fil sauf pour l'unité de communication sans fil à une unité sans fil de récupération de canal de communication sans fil optimal (S122).

4. Programme de commutation de canal de communication sans fil pour amener un ordinateur d'un dispositif de base (100) d'un système LAN sans fil (100) possédant deux unités sans fil ou plus (104, 105) comportant : des moyens de communication pour communiquer avec une unité terminale par l'intermédiaire d'un canal de communication sans fil ; des moyens de sélection de canal pour sélectionner ledit canal de communication sans fil utilisé par lesdits moyens de communication ; des moyens de détection pour détecter un niveau de réception d'un signal de bruit reçu par l'intermédiaire desdits moyens de communication ; et des moyens de détermination pour déterminer si oui ou non un signal reçu par l'intermédiaire desdits moyens de communication est un signal LAN sans fil d'un autre système, à effectuer les étapes **caractérisées par** :
une étape de réglage d'unité pour régler l'une desdites deux unités sans fil ou plus en tant qu'unité sans fil de communication avec ladite unité terminale (S105), et régler l'autre en tant qu'unité sans fil de récupération d'un canal de communication sans fil optimal au moment du début (S109) ;
une étape de réglage de canal pour sélectionner et configurer un canal de communication sans fil utilisé pour des communications selon ladite unité sans fil de communication (S111) ;
une étape de détection d'état pour détecter un état de communication du canal de communication sans fil utilisé pour des communications, en fonction d'une sortie de détection provenant desdits moyens de détection de ladite unité sans fil de communication et de la sortie de détermination provenant desdits moyens de détermination, à chaque moment prédéterminé après une connexion de la ligne de communication à ladite unité terminale au moyen de ladite unité sans fil de communication (S117) ;
une étape de récupération pour récupérer le canal de communication sans fil optimal, en fonction de la sortie de détection provenant desdits moyens de détection et de la sortie de détermination provenant desdits moyens de détermination, tout en modifiant un canal de communication sans fil disponible sauf pour le canal de communication sans fil utilisé pour les communications, à chaque moment prédéterminé, dans ladite unité sans fil de récupération en contrôlant lesdits moyens de sélection de canal, après connexion de la ligne de communication à ladite unité terminale au moyen de ladite unité sans fil de communication (S119) ;
une étape de configuration de canal candidat pour configurer ledit canal de communication sans fil optimal récupéré par lesdits moyens de récupération en tant que candidat pour un canal de communication sans fil utilisé pour des communications, concernant ladite unité sans fil de récupération (S120) ; et
une étape de contrôle de commutation pour remplacer ladite unité sans fil de communication par ladite unité sans fil de récupération qui est commutée à une unité sans fil de communication avec l'unité terminale, lorsque le canal de communication sans fil en tant que candidat récupéré par lesdits moyens de récupération possède un état de communication meilleur que celui du canal de communication sans fil qui est déjà utilisé pour des communications, et commuter nouvellement l'unité sans fil excepté pour l'unité sans fil de communication à une unité sans fil de récupération de canal de communication sans fil optimal (S122).

5. Support d'enregistrement possédant un programme de commutation de canal de communication sans fil, qui peut être lu par un ordinateur, pour amener un ordinateur du dispositif de base (101) d'un système LAN sans fil (100) possédant deux unités sans fil ou plus (104, 105) comprenant : des moyens de communication pour communiquer avec une unité terminale par l'intermédiaire d'un canal de communication sans fil ; des moyens de sélection de canal pour sélectionner ledit canal de communication sans fil utilisé par lesdits moyens de communication ; des moyens de détection pour détecter un niveau de réception d'un signal de bruit reçu par l'intermédiaire desdits moyens de communication ; et des moyens de détermination pour déterminer si oui ou non un signal reçu par l'intermédiaire desdits moyens de communication est un signal LAN sans fil d'un autre système, à effectuer les étapes **caractérisées par** :
une unité de réglage d'unité pour régler l'une desdites deux unités sans fil ou plus en tant qu'unité sans fil de communication avec ladite unité terminale (S105), et régler l'autre en tant qu'unité sans fil de récupération d'un canal de communication sans fil optimal au moment du début (S109) ;
une étape de réglage de canal pour sélectionner et configurer un canal de communication sans fil utilisé pour des communications concernant ladite unité sans fil de communication (S111) ;
une étape de détection d'état pour détecter un état de communication du canal de communication sans fil utilisé pour des communications, en fonction d'une sortie de détection provenant desdits moyens de détection de ladite unité sans fil de communication et une sortie de détermination provenant desdits moyens de détermination, à chaque moment prédéterminé après connexion d'une ligne de communication à ladite unité terminale au moyen de ladite unité sans fil de communication (S117) ;
une étape de récupération pour récupérer le canal de communication sans fil optimal, en fonction de la sortie de détection provenant desdits moyens de détection et de la sortie de détermination provenant desdits moyens de détermination, tout en modifiant un canal de communication sans fil disponible sauf pour le canal de communication sans fil utilisé pour des communications, à chaque moment prédéterminé, dans ladite unité sans fil de récupération en contrôlant lesdits moyens de sélection de canal, après connexion de la ligne de communication à ladite unité terminale au moyen de ladite unité sans fil de communication (S119) ;
une étape de configuration de canal candidat pour configurer ledit canal de communication sans fil optimal récupéré par lesdits moyens de récupération en tant que candidat pour un canal de communication sans fil utilisé pour des communications, concernant ladite unité sans fil de récupération (S120) ; et
une étape de contrôle de commutateur pour remplacer ladite unité sans fil de communication par ladite unité sans fil de récupération qui est commutée à une unité sans fil pour une communication avec l'unité terminale, lorsque le canal de communication sans fil en tant que candidat récupéré par lesdits moyens de récupération présente un état de communication meilleur que celui du canal de communication sans fil déjà utilisé pour des communications, et commuter nouvellement l'unité sans fil sauf pour l'unité sans fil de communication à une unité sans fil de récupération du canal de communication sans fil optimal (S122).
